(19) Europäisches Patentamt
European Patent Office
Office européen des brevets

(11) EP 3 293 696 A1

(12) EUROPEAN PATENT APPLICATION

(43) Date of publication:
14.03.2018 Bulletin 2018/11

(51) Int Cl.:
G06Q 50/00 (2012.01)　　G06Q 10/04 (2012.01)

(21) Application number: 17189931.3

(22) Date of filing: 07.09.2017

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 29.12.2016　US 201615393926
06.09.2017　PCT/US2017/050211
07.09.2016　US 201662384421 P

(71) Applicant: Facebook, Inc.
Menlo Park, CA 94025 (US)

(72) Inventors:
• Douze, Matthys
Menlo Park, CA California 94025 (US)
• Jegou, Hervé
Menlo Park, CA California 94025 (US)
• Perronnin, Florent
Menlo Park, CA California 94025 (US)

(74) Representative: Schröer, Gernot H.
Meissner Bolte Patentanwälte
Rechtsanwälte Partnerschaft mbB
Bankgasse 3
90402 Nürnberg (DE)

(54) SIMILARITY SEARCH USING POLYSEMOUS CODES

(57) In one embodiment, a method includes receiving a query, wherein the query is represented by an n-dimensional vector in an n-dimensional vector space; quantizing the vector representing the query using a quantizer, wherein the quantized vector corresponds to a polysemous code, and wherein the quantizer has been trained by machine learning to determine polysemous codes such that the Hamming distance approximates the inter-centroid distance using an objective function; calculating, for each of a plurality of content objects, a Hamming distance between the polysemous code corresponding to the vector representing the query and a polysemous code corresponding to a quantized vector representing the content object; and determining that a content object of the plurality of content objects is an approximate nearest neighbor to the query based on determining that the calculated Hamming distance is less than a threshold amount.

FIG. 9

**Description**

## TECHNICAL FIELD

This disclosure generally relates to social graphs and performing searches for objects within a social-networking environment.

## BACKGROUND

A social-networking system, which may include a social-networking website, may enable its users (such as persons or organizations) to interact with it and with each other through it. The social-networking system may, with input from a user, create and store in the social-networking system a user profile associated with the user. The user profile may include demographic information, communication-channel information, and information on personal interests of the user. The social-networking system may also, with input from a user, create and store a record of relationships of the user with other users of the social-networking system, as well as provide services (e.g. wall posts, photo-sharing, event organization, messaging, games, or advertisements) to facilitate social interaction between or among users.

The social-networking system may send over one or more networks content or messages related to its services to a mobile or other computing device of a user. A user may also install software applications on a mobile or other computing device of the user for accessing a user profile of the user and other data within the social-networking system. The social-networking system may generate a personalized set of content objects to display to a user, such as a newsfeed of aggregated stories of other users connected to the user.

Social-graph analysis views social relationships in terms of network theory consisting of nodes and edges. Nodes represent the individual actors within the networks, and edges represent the relationships between the actors. The resulting graph-based structures are often very complex. There can be many types of nodes and many types of edges for connecting nodes. In its simplest form, a social graph is a map of all of the relevant edges between all the nodes being studied.

## SUMMARY OF PARTICULAR EMBODIMENTS

In particular embodiments, the social-networking system may perform an approximate nearest neighbor (ANN) search in the compressed domain, for example, to search a database for images that are similar to a query image. The method uses polysemous codes that can serve to perform comparisons using both product quantization and binary code Hamming distance. To accomplish this, the method may start by quantizing the vector space of a database. The assignment of vector indexes to binary codes may then be optimized such that the Hamming distance approximates the inter-centroid distance. A query vector may then be compared in two-stages with the database by iterating through the vectors indexes, filtering for vectors with a Hamming distance less than a chosen threshold, and computing the product quantization distance of the vectors that are close enough in Hamming distance. This technique can be useful for any application of ANN, including but not limited to image searching, video searching, and social-network social proximity analysis.

Elaborating on the method, the first step may be to quantize the vector space by dividing the vectors into subvectors, thus decomposing the feature space as a product space. Each subvector is part of a subspace and may be quantized using a different quantizer. The distance between vectors may then be estimated as the sum of the distances between corresponding subvectors. Using product quantization, the distances between subvectors may be efficiently read from look-up tables. The product quantization may also be optimized by combining distance estimation with a traditional index by creating a second coarse quantizer using a dictionary. This second coarse quantizer may be used for non-exhaustive searching by limiting the search to a subset of the quantized vectors.

Once the quantized space is created, it may then be optimized by translating the vector codes to polysemous codes, where the Hamming distance approximates the inter-centroid distance. This may be done by learning permutations of the bits such that the binary comparison reflects centroid distances, and is done for each subquantizer.

Finally, the query vector may be searched by quantizing the query vector using the above-described technique, and computing the Hamming distance by interpreting the codes as binary codes. If a vector's binary distance to the query vector is less than a threshold distance (chosen as a system parameter), the vectors are then compared using product quantization (which yields a more accurate estimate). In this manner, the method may nearly achieve the efficiency of binary searches with the precision of product quantization.

The embodiments disclosed herein are only examples, and the scope of this disclosure is not limited to them. Particular embodiments may include all, some, or none of the components, elements, features, functions, operations, or steps of the embodiments disclosed above. Embodiments according to the invention are in particular disclosed in the attached claims directed to a method, a storage medium, a system and a computer program product, wherein any feature mentioned in one claim category, e.g. method, can be claimed in another claim category, e.g. system, as well. The dependencies or references back in the attached claims are chosen for formal reasons only. However any subject matter resulting from a deliberate reference back to any previous claims (in particular multiple dependencies) can be claimed as well, so that any combination of claims and the features thereof are disclosed and can be claimed regardless of the dependencies chosen in the attached claims. The subject-matter which can be claimed comprises not only the combinations of features as set out in the attached claims but also any other combination of features in the claims, wherein each feature mentioned in the claims can be combined with any other feature or combination of other features in the claims. Furthermore, any of the embodiments and features described or depicted herein can be claimed in a separate claim and/or in any combination with any embodiment or feature described or depicted herein or with any of the features of the attached claims.

In an embodiment according to the invention, a method may comprise, by a computing device:

receiving a query, in particular a query for one or more similar images and/or videos in a database, wherein the query is represented by an n-dimensional vector in an n-dimensional vector space;

quantizing the vector representing the query using a quantizer, wherein the quantized vector corresponds to a polysemous code, and wherein the quantizer has been trained by machine learning to determine polysemous codes such that the Hamming distance approximates the inter-centroid distance using an objective function;

calculating, for each of a plurality of content objects, a Hamming distance between the polysemous code corresponding to the vector representing the query and a polysemous code corresponding to a quantized vector representing the content object; and

determining that a content object of the plurality of content objects is an approximate nearest neighbor to the query based on determining that the calculated Hamming distance between the polysemous code corresponding to the vector representing the query and the polysemous code corresponding to the vector representing the content object is less than a threshold amount.

In an embodiment according to the invention, a method may comprise dividing the vector representing the query into a plurality of subvectors representing the query, wherein:

quantizing the vector representing the query comprises quantizing each of the plurality of subvectors representing the query using a plurality of subquantizers, each quantized subvector corresponding to a polysemous code;

each subquantizer has been trained by machine learning to determine polysemous codes such that the Hamming distance approximates the inter-centroid distance using an objective function; and

the Hamming distance between the polysemous code corresponding to the vector representing the query and the polysemous code corresponding to the quantized vector representing the content object is calculated based on a plurality of Hamming distances between each polysemous code corresponding to each respective subvector representing the query and each of a plurality of respective polysemous codes corresponding to respective quantized subvectors representing the content object.

Each of the subquantizers may be distinct from each other subquantizer of the plurality of subquantizers.

Each of the plurality of quantized subvectors representing the content object may be quantized using the corresponding subquantizer.

A Hamming distance between a first polysemous code and a second polysemous may be calculated as the number of bits which differ between the first polysemous code and the second polysemous code.

A Hamming distance between a first polysemous code and a second polysemous code may be calculated based on a pre-generated lookup table.

The quantizer may use k-means clustering.

In an embodiment according to the invention, in a method, wherein the objective function is

$$\operatorname*{argmax}_{\pi} \sum_{i \in \mathcal{J}, j \in \mathcal{J}} \left[ h\big(\pi(i), \pi(j)\big) - f\Big(d\big(c_i, c_j\big)\Big) \right]^2 ,$$

$\mathcal{J}$ may be a set of centroid indexes;

$c_i$ may be a reproduction value associated with centroid $i$;

the function $\pi$ may map each centroid index to a different vertex of a unit hypercube;

$h(\pi(i), \pi(j))$ may be a Hamming distance between $\pi(i)$ and $\pi(j)$;

$d(c_i, c_j)$ may be the distance between $c_i$ and $c_j$; and

the function $f$ may be a monotonously increasing function that maps $d(c_i, c_j)$ into a range of comparable Hamming distances.

In an embodiment according to the invention, in a method, wherein the function $f$ is

$$f(x) = \frac{\sqrt{d}}{2\sigma}(x - \mu) + \frac{d}{2},$$

$\mu$ may be an empirically measured mean of d; and
$\sigma$ may be an empirically measured standard deviation of *d*.

In an embodiment according to the invention, in a method, wherein the objective function is

$$\operatorname*{argmax}_{\pi} \sum_{i \in \mathcal{J}, j \in \mathcal{J}} w\left(f\left(d\left(c_i, c_j\right)\right)\right)\left[h\left(\pi(i), \pi(j)\right) - f\left(d\left(c_i, c_j\right)\right)\right]^2,$$

may be a set of centroid indexes;
$c_i$ may be a reproduction value associated with centroid $i$;
the function $\pi$ may map each centroid index to a different vertex of a unit hypercube;
$h(\pi(i), \pi(j))$ may be a Hamming distance between $\pi(i)$ and $\pi(j)$;
$d(c_i, c_j)$ may be the distance between $c_i$ and $c_j$;
the function $f$ may be a monotonously increasing function that maps $d(c_i, c_j)$ into a range of comparable Hamming distances;
the function $w$ may be the function $w(u) = \alpha^u$ with $\alpha < 1$.

In an embodiment according to the invention, a method may comprise sending one or more content objects determined to be approximate nearest neighbors to the query to the first user in response to the query.
Each of the content objects may comprise an image.
The received query may comprise a query image, the method may comprise:

generating the n-dimensional vector representing the query image.

The query may correspond to a request for images similar to the query image.
Each of the content objects may comprise a video.
The received query may comprise a query video, the method may comprise:

generating the n-dimensional vector representing the query video.

In an embodiment according to the invention, a method may comprise accessing a social graph comprising a plurality of nodes and a plurality of edges connecting the nodes, each of the edges between two of the nodes representing a single degree of separation between them, the nodes may comprise:

a first node corresponding to the first user; and
a plurality of second nodes corresponding to the plurality of content objects, respectively.

In an embodiment according to the invention, one or more computer-readable non-transitory storage media may embody software that is operable when executed to:

receive a query, wherein the query is represented by an n-dimensional vector in an n-dimensional vector space;
quantize the vector representing the query using a quantizer, wherein the quantized vector corresponds to a polysemous code, and wherein the quantizer has been trained by machine learning to determine polysemous codes such that the Hamming distance approximates the inter-centroid distance using an objective function;
calculate, for each of a plurality of content objects, a Hamming distance between the polysemous code corresponding to the vector representing the query and a polysemous code corresponding to a quantized vector representing the content object; and
determine that a content object of the plurality of content objects is an approximate nearest neighbor to the query based on determining that the calculated Hamming distance between the polysemous code corresponding to the vector representing the query and the polysemous code corresponding to the vector representing the content object is less than a threshold amount.

The software may be operable when executed to divide the vector representing the query into a plurality of subvectors representing the query, wherein:

quantizing the vector representing the query comprises quantizing each of the plurality of subvectors representing the query using a plurality of subquantizers, each quantized subvector corresponding to a polysemous code; each subquantizer has been trained by machine learning to determine polysemous codes such that the Hamming distance approximates the inter-centroid distance using an objective function; and the Hamming distance between the polysemous code corresponding to the vector representing the query and the polysemous code corresponding to the quantized vector representing the content object is calculated based on a plurality of Hamming distances between each polysemous code corresponding to each respective subvector representing the query and each of a plurality of respective polysemous codes corresponding to respective quantized subvectors representing the content object.

In an embodiment according to the invention, a system may comprise: one or more processors; and a non-transitory memory coupled to the processors comprising instructions executable by the processors, the processors operable when executing the instructions to:

receive a query, wherein the query is represented by an n-dimensional vector in an n-dimensional vector space; quantize the vector representing the query using a quantizer, wherein the quantized vector corresponds to a polysemous code, and wherein the quantizer has been trained by machine learning to determine polysemous codes such that the Hamming distance approximates the inter-centroid distance using an objective function; calculate, for each of a plurality of content objects, a Hamming distance between the polysemous code corresponding to the vector representing the query and a polysemous code corresponding to a quantized vector representing the content object; and determine that a content object of the plurality of content objects is an approximate nearest neighbor to the query based on determining that the calculated Hamming distance between the polysemous code corresponding to the vector representing the query and the polysemous code corresponding to the vector representing the content object is less than a threshold amount.

In an embodiment according to the invention, one or more computer-readable non-transitory storage media may embody software that is operable when executed to perform a method according to the invention or any of the above mentioned embodiments.

In an embodiment according to the invention, a system may comprise: one or more processors; and at least one memory coupled to the processors and comprising instructions executable by the processors, the processors operable when executing the instructions to perform a method according to the invention or any of the above mentioned embodiments.

In an embodiment according to the invention, a computer program product, preferably comprising a computer-readable non-transitory storage media, may be operable when executed on a data processing system to perform a method according to the invention or any of the above mentioned embodiments.

## BRIEF DESCRIPTION OF THE DRAWINGS

FIG. 1     illustrates an example network environment associated with a social-networking system.
FIG. 2     illustrates an example social graph.
FIG. 3     illustrates the re-ordering of a numeration of centroids such that distances between similar centroids are small in the Hamming space.
FIG. 4     illustrates a comparison of the codes used as binary vectors before and after optimization.
FIG. 5     illustrates the impact of the Hamming threshold on the dual strategy.
FIG. 6     illustrates the performance of polysemous codes along the iterations for the distance-based objective function.
FIG. 7     illustrates the performance of various methods applying polysemous codes on the FYCNN90M benchmarks.
FIG. 8     illustrates examples of image modes and their neighbors in a graph.
FIG. 9     illustrates an example method 900 for performing a similarity search using polysemous codes.
FIG. 10    illustrates an example computer system.

## DESCRIPTION OF EXAMPLE EMBODIMENTS

### System Overview

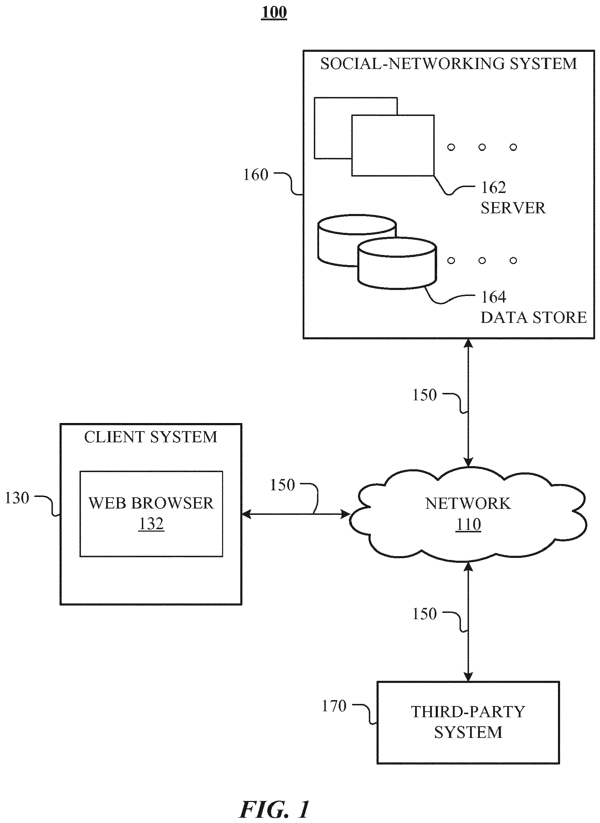

**FIG. 1** illustrates an example network environment 100 associated with a social-networking system. Network environment 100 includes a client system 130, a social-networking system 160, and a third-party system 170 connected to each other by a network 110. Although FIG. 1 illustrates a particular arrangement of a client system 130, a social-networking system 160, a third-party system 170, and a network 110, this disclosure contemplates any suitable arrangement of a client system 130, a social-networking system 160, a third-party system 170, and a network 110. As an example and not by way of limitation, two or more of a client system 130, a social-networking system 160, and a third-party system 170 may be connected to each other directly, bypassing a network 110. As another example, two or more of a client system 130, a social-networking system 160, and a third-party system 170 may be physically or logically co-located with each other in whole or in part. Moreover, although FIG. 1 illustrates a particular number of client systems 130, social-networking systems 160, third-party systems 170, and networks 110, this disclosure contemplates any suitable number of client systems 130, social-networking systems 160, third-party systems 170, and networks 110. As an example and not by way of limitation, network environment 100 may include multiple client systems 130, social-networking systems 160, third-party systems 170, and networks 110.

This disclosure contemplates any suitable network 110. As an example and not by way of limitation, one or more portions of a network 110 may include an ad hoc network, an intranet, an extranet, a virtual private network (VPN), a local area network (LAN), a wireless LAN (WLAN), a wide area network (WAN), a wireless WAN (WWAN), a metropolitan area network (MAN), a portion of the Internet, a portion of the Public Switched Telephone Network (PSTN), a cellular telephone network, or a combination of two or more of these. A network 110 may include one or more networks 110.

Links 150 may connect a client system 130, a social-networking system 160, and a third-party system 170 to a communication network 110 or to each other. This disclosure contemplates any suitable links 150. In particular embodiments, one or more links 150 include one or more wireline (such as for example Digital Subscriber Line (DSL) or Data Over Cable Service Interface Specification (DOCSIS)), wireless (such as for example Wi-Fi or Worldwide Interoperability for Microwave Access (WiMAX)), or optical (such as for example Synchronous Optical Network (SONET) or Synchronous Digital Hierarchy (SDH)) links. In particular embodiments, one or more links 150 each include an ad hoc network, an intranet, an extranet, a VPN, a LAN, a WLAN, a WAN, a WWAN, a MAN, a portion of the Internet, a portion of the PSTN, a cellular technology-based network, a satellite communications technology-based network, another link 150, or a combination of two or more such links 150. Links 150 need not necessarily be the same throughout a network environment 100. One or more first links 150 may differ in one or more respects from one or more second links 150.

In particular embodiments, a client system 130 may be an electronic device including hardware, software, or embedded logic components or a combination of two or more such components and capable of carrying out the appropriate functionalities implemented or supported by a client system 130. As an example and not by way of limitation, a client system 130 may include a computer system such as a desktop computer, notebook or laptop computer, netbook, a tablet computer, e-book reader, GPS device, camera, personal digital assistant (PDA), handheld electronic device, cellular telephone, smartphone, other suitable electronic device, or any suitable combination thereof. This disclosure contemplates any suitable client systems 130. A client system 130 may enable a network user at a client system 130 to access a network 110. A client system 130 may enable its user to communicate with other users at other client systems 130.

In particular embodiments, a client system 130 may include a web browser 132, such as MICROSOFT INTERNET EXPLORER, GOOGLE CHROME or MOZILLA FIREFOX, and may have one or more add-ons, plug-ins, or other extensions, such as TOOLBAR or YAHOO TOOLBAR. A user at a client system 130 may enter a Uniform Resource Locator (URL) or other address directing a web browser 132 to a particular server (such as server 162, or a server associated with a third-party system 170), and the web browser 132 may generate a Hyper Text Transfer Protocol (HTTP) request and communicate the HTTP request to server. The server may accept the HTTP request and communicate to a client system 130 one or more Hyper Text Markup Language (HTML) files responsive to the HTTP request. The client system 130 may render a web interface (e.g. a webpage) based on the HTML files from the server for presentation to the user. This disclosure contemplates any suitable source files. As an example and not by way of limitation, a web interface may be rendered from HTML files, Extensible Hyper Text Markup Language (XHTML) files, or Extensible Markup Language (XML) files, according to particular needs. Such interfaces may also execute scripts such as, for example and without limitation, those written in JAVASCRIPT, JAVA, MICROSOFT SILVERLIGHT, combinations of markup language and scripts such as AJAX (Asynchronous JAVASCRIPT and XML), and the like. Herein, reference to a web interface encompasses one or more corresponding source files (which a browser may use to render the web interface) and vice versa, where appropriate.

In particular embodiments, the social-networking system 160 may be a network-addressable computing system that can host an online social network. The social-networking system 160 may generate, store, receive, and send social-networking data, such as, for example, user-profile data, concept-profile data, social-graph information, or other suitable data related to the online social network. The social-networking system 160 may be accessed by the other components of network environment 100 either directly or via a network 110. As an example and not by way of limitation, a client system 130 may access the social-networking system 160 using a web browser 132, or a native application associated with the social-networking system 160 (e.g., a mobile social-networking application, a messaging application, another suitable application, or any combination thereof) either directly or via a network 110. In particular embodiments, the social-networking system 160 may include one or more servers 162. Each server 162 may be a unitary server or a distributed server spanning multiple computers or multiple datacenters. Servers 162 may be of various types, such as, for example and without limitation, web server, news server, mail server, message server, advertising server, file server, application server, exchange server, database server, proxy server, another server suitable for performing functions or processes described herein, or any combination thereof. In particular embodiments, each server 162 may include hardware, software, or embedded logic components or a combination of two or more such components for carrying out the appropriate functionalities implemented or supported by server 162. In particular embodiments, the social-networking system 160 may include one or more data stores 164. Data stores 164 may be used to store various types of information. In particular embodiments, the information stored in data stores 164 may be organized according to specific data structures. In particular embodiments, each data store 164 may be a relational, columnar, correlation, or other suitable database. Although this disclosure describes or illustrates particular types of databases, this disclosure contemplates any suitable types of databases. Particular embodiments may provide interfaces that enable a client system 130, a social-networking system 160, or a third-party system 170 to manage, retrieve, modify, add, or delete, the information stored in data store 164.

In particular embodiments, the social-networking system 160 may store one or more social graphs in one or more data stores 164. In particular embodiments, a social graph may include multiple nodes-which may include multiple user nodes (each corresponding to a particular user) or multiple concept nodes (each corresponding to a particular concept)-and multiple edges connecting the nodes. The social-networking system 160 may provide users of the online social network the ability to communicate and interact with other users. In particular embodiments, users may join the online social network via the social-networking system 160 and then add connections (e.g., relationships) to a number of other users of the social-networking system 160 whom they want to be connected to. Herein, the term "friend" may refer to any other user of the social-networking system 160 with whom a user has formed a connection, association, or relationship via the social-networking system 160.

In particular embodiments, the social-networking system 160 may provide users with the ability to take actions on various types of items or objects, supported by the social-networking system 160. As an example and not by way of limitation, the items and objects may include groups or social networks to which users of the social-networking system 160 may belong, events or calendar entries in which a user might be interested, computer-based applications that a user may use, transactions that allow users to buy or sell items via the service, interactions with advertisements that a user may perform, or other suitable items or objects. A user may interact with anything that is capable of being represented in the social-networking system 160 or by an external system of a third-party system 170, which is separate from the social-networking system 160 and coupled to the social-networking system 160 via a network 110.

In particular embodiments, the social-networking system 160 may be capable of linking a variety of entities. As an example and not by way of limitation, the social-networking system 160 may enable users to interact with each other as well as receive content from third-party systems 170 or other entities, or to allow users to interact with these entities through an application programming interfaces (API) or other communication channels.

In particular embodiments, a third-party system 170 may include one or more types of servers, one or more data stores, one or more interfaces, including but not limited to APIs, one or more web services, one or more content sources, one or more networks, or any other suitable components, e.g., that servers may communicate with. A third-party system 170 may be operated by a different entity from an entity operating the social-networking system 160. In particular embodiments, however, the social-networking system 160 and third-party systems 170 may operate in conjunction with each other to provide social-networking services to users of the social-networking system 160 or third-party systems 170. In this sense, the social-networking system 160 may provide a platform, or backbone, which other systems, such as third-party systems 170, may use to provide social-networking services and functionality to users across the Internet.

In particular embodiments, a third-party system 170 may include a third-party content object provider. A third-party content object provider may include one or more sources of content objects, which may be communicated to a client system 130. As an example and not by way of limitation, content objects may include information regarding things or activities of interest to the user, such as, for example, movie show times, movie reviews, restaurant reviews, restaurant menus, product information and reviews, or other suitable information. As another example and not by way of limitation, content objects may include incentive content objects, such as coupons, discount tickets, gift certificates, or other suitable incentive objects.

In particular embodiments, the social-networking system 160 also includes user-generated content objects, which may enhance a user's interactions with the social-networking system 160. User-generated content may include anything a user can add, upload, send, or "post" to the social-networking system 160. As an example and not by way of limitation, a user communicates posts to the social-networking system 160 from a client system 130. Posts may include data such as status updates or other textual data, location information, photos, videos, links, music or other similar data or media. Content may also be added to the social-networking system 160 by a third-party through a "communication channel," such as a newsfeed or stream.

In particular embodiments, the social-networking system 160 may include a variety of servers, sub-systems, programs, modules, logs, and data stores. In particular embodiments, the social-networking system 160 may include one or more of the following: a web server, action logger, API-request server, relevance-and-ranking engine, content-object classifier, notification controller, action log, third-party-content-object-exposure log, inference module, authorization/privacy server, search module, advertisement-targeting module, user-interface module, user-profile store, connection store, third-party content store, or location store. The social-networking system 160 may also include suitable components such as network interfaces, security mechanisms, load balancers, failover servers, management-and-network-operations consoles, other suitable components, or any suitable combination thereof. In particular embodiments, the social-networking system 160 may include one or more user-profile stores for storing user profiles. A user profile may include, for example, biographic information, demographic information, behavioral information, social information, or other types of descriptive information, such as work experience, educational history, hobbies or preferences, interests, affinities, or location. Interest information may include interests related to one or more categories. Categories may be general or specific. As an example and not by way of limitation, if a user "likes" an article about a brand of shoes the category may be the brand, or the general category of "shoes" or "clothing." A connection store may be used for storing connection information about users. The connection information may indicate users who have similar or common work experience, group memberships, hobbies, educational history, or are in any way related or share common attributes. The connection information may also include user-defined connections between different users and content (both internal and external). A web server may be used for linking the social-networking system 160 to one or more client systems 130 or one or more third-party systems 170 via a network 110. The web server may include a mail server or other messaging functionality for receiving and routing messages between the social-networking system 160 and one or more client systems 130. An API-request server may allow a third-party system 170 to access information from the social-networking system 160 by calling one or more APIs. An action logger may be used to receive communications from a web server about a user's actions on or off the social-networking system 160. In conjunction with the action log, a third-party-content-object log may be maintained of user exposures to third-party-content objects. A notification controller may provide information regarding content objects to a client system 130. Information may be pushed to a client system 130 as notifications, or information may be pulled from a client system 130 responsive to a request received from a client system 130. Authorization servers may be used to enforce one or more privacy settings of the users of the social-networking system 160. A privacy setting of a user determines how particular information associated with a user can be shared. The authorization server may allow users to opt in to or opt out of having their actions logged by the social-networking system 160 or shared with other systems (e.g., a third-party system 170), such as, for example, by setting appropriate privacy settings. Third-party-content-object stores may be used to store content objects received from third parties, such as a third-party system 170. Location stores may be used for storing location information received from client systems 130 associated with users. Advertisement-pricing modules may combine social information, the current time, location information, or other suitable information to provide relevant advertisements, in the form of notifications, to a user.

Social Graphs

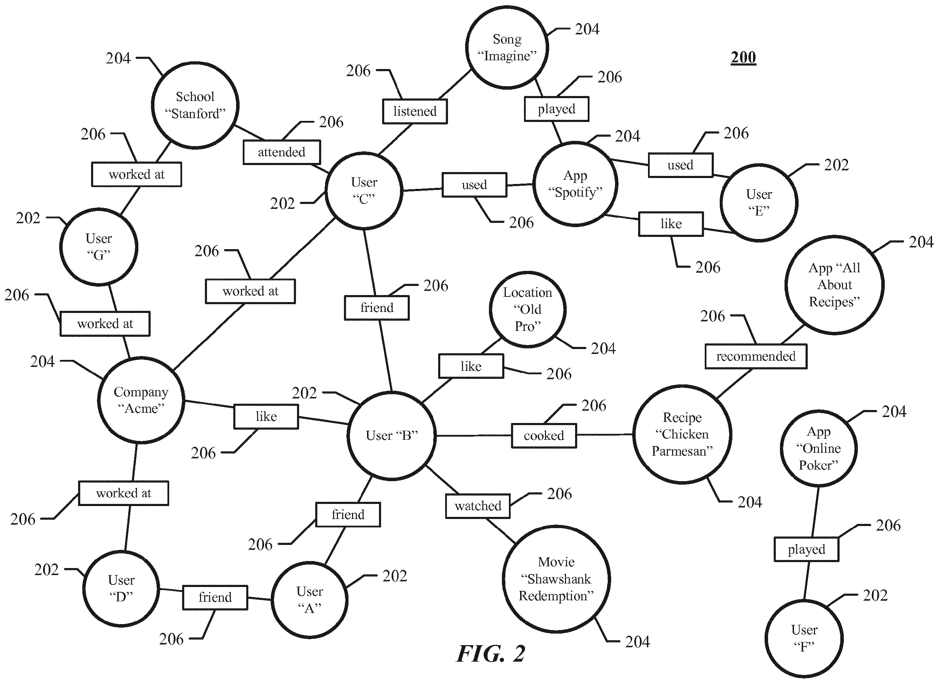

**FIG. 2** illustrates an example social graph 200. In particular embodiments, the social-networking system 160 may store one or more social graphs 200 in one or more data stores. In particular embodiments, the social graph 200 may include multiple nodes-which may include multiple user nodes 202 or multiple concept nodes 204-and multiple edges 206 connecting the nodes. The example social graph 200 illustrated in FIG. 2 is shown, for didactic purposes, in a two-dimensional visual map representation. In particular embodiments, a social-networking system 160, a client system 130, or a third-party system 170 may access the social graph 200 and related social-graph information for suitable applications. The nodes and edges of the social graph 200 may be stored as data objects, for example, in a data store (such as a social-graph database). Such a data store may include one or more searchable or queryable indexes of nodes or edges of the social graph 200.

In particular embodiments, a user node 202 may correspond to a user of the social-networking system 160. As an example and not by way of limitation, a user may be an individual (human user), an entity (e.g., an enterprise, business, or third-party application), or a group (e.g., of individuals or entities) that interacts or communicates with or over the social-networking system 160. In particular embodiments, when a user registers for an account with the social-networking system 160, the social-networking system 160 may create a user node 202 corresponding to the user, and store the user node 202 in one or more data stores. Users and user nodes 202 described herein may, where appropriate, refer to registered users and user nodes 202 associated with registered users. In addition or as an alternative, users and user nodes 202 described herein may, where appropriate, refer to users that have not registered with the social-networking system 160. In particular embodiments, a user node 202 may be associated with information provided by a user or information gathered by various systems, including the social-networking system 160. As an example and not by way of limitation, a user may provide his or her name, profile picture, contact information, birth date, sex, marital status, family status, employment, education background, preferences, interests, or other demographic information. In particular embodiments, a user node 202 may be associated with one or more data objects corresponding to information associated with a user. In particular embodiments, a user node 202 may correspond to one or more web interfaces.

In particular embodiments, a concept node 204 may correspond to a concept. As an example and not by way of limitation, a concept may correspond to a place (such as, for example, a movie theater, restaurant, landmark, or city); a website (such as, for example, a website associated with the social-networking system 160 or a third-party website associated with a web-application server); an entity (such as, for example, a person, business, group, sports team, or celebrity); a resource (such as, for example, an audio file, video file, digital photo, text file, structured document, or application) which may be located within the social-networking system 160 or on an external server, such as a web-application server; real or intellectual property (such as, for example, a sculpture, painting, movie, game, song, idea, photograph, or written work); a game; an activity; an idea or theory; another suitable concept; or two or more such concepts. A concept node 204 may be associated with information of a concept provided by a user or information gathered by various systems, including the social-networking system 160. As an example and not by way of limitation, information of a concept may include a name or a title; one or more images (e.g., an image of the cover page of a book); a location (e.g., an address or a geographical location); a website (which may be associated with a URL); contact information (e.g., a phone number or an email address); other suitable concept information; or any suitable combination of such information. In particular embodiments, a concept node 204 may be associated with one or more data objects corresponding to information associated with concept node 204. In particular embodiments, a concept node 204 may correspond to one or more web interfaces.

In particular embodiments, a node in the social graph 200 may represent or be represented by a web interface (which may be referred to as a "profile interface"). Profile interfaces may be hosted by or accessible to the social-networking system 160. Profile interfaces may also be hosted on third-party websites associated with a third-party system 170. As an example and not by way of limitation, a profile interface corresponding to a particular external web interface may be the particular external web interface and the profile interface may correspond to a particular concept node 204. Profile interfaces may be viewable by all or a selected subset of other users. As an example and not by way of limitation, a user node 202 may have a corresponding user-profile interface in which the corresponding user may add content, make declarations, or otherwise express himself or herself. As another example and not by way of limitation, a concept node 204 may have a corresponding concept-profile interface in which one or more users may add content, make declarations, or express themselves, particularly in relation to the concept corresponding to concept node 204.

In particular embodiments, a concept node 204 may represent a third-party web interface or resource hosted by a third-party system 170. The third-party web interface or resource may include, among other elements, content, a selectable or other icon, or other inter-actable object (which may be implemented, for example, in JavaScript, AJAX, or PHP codes) representing an action or activity. As an example and not by way of limitation, a third-party web interface may include a selectable icon such as "like," "check-in," "eat," "recommend," or another suitable action or activity. A user viewing the third-party web interface may perform an action by selecting one of the icons (e.g., "check-in"), causing a client system 130 to send to the social-networking system 160 a message indicating the user's action. In response to the message, the social-networking system 160 may create an edge (e.g., a check-in-type edge) between a user node 202 corresponding to the user and a concept node 204 corresponding to the third-party web interface or resource and store edge 206 in one or more data stores.

In particular embodiments, a pair of nodes in the social graph 200 may be connected to each other by one or more edges 206. An edge 206 connecting a pair of nodes may represent a relationship between the pair of nodes. In particular embodiments, an edge 206 may include or represent one or more data objects or attributes corresponding to the relationship between a pair of nodes. As an example and not by way of limitation, a first user may indicate that a second user is a "friend" of the first user. In response to this indication, the social-networking system 160 may send a "friend request" to the second user. If the second user confirms the "friend request," the social-networking system 160 may create an edge 206 connecting the first user's user node 202 to the second user's user node 202 in the social graph 200 and store edge 206 as social-graph information in one or more of data stores 164. In the example of FIG. 2, the social graph 200 includes an edge 206 indicating a friend relation between user nodes 202 of user "A" and user "B" and an edge indicating a friend relation between user nodes 202 of user "C" and user "B." Although this disclosure describes or illustrates particular edges 206 with particular attributes connecting particular user nodes 202, this disclosure contemplates any suitable edges 206 with any suitable attributes connecting user nodes 202. As an example and not by way of limitation, an edge 206 may represent a friendship, family relationship, business or employment relationship, fan relationship (including, e.g., liking, etc.), follower relationship, visitor relationship (including, e.g., accessing, viewing, checking-in, sharing, etc.), subscriber relationship, superior/subordinate relationship, reciprocal relationship, non-reciprocal relationship, another suitable type of relationship, or two or more such relationships. Moreover, although this disclosure generally describes nodes as being connected, this disclosure also describes users or concepts as being connected. Herein, references to users or concepts being connected may, where appropriate, refer to the nodes corresponding to those users or concepts being connected in the social graph 200 by one or more edges 206.

In particular embodiments, an edge 206 between a user node 202 and a concept node 204 may represent a particular action or activity performed by a user associated with user node 202 toward a concept associated with a concept node 204. As an example and not by way of limitation, as illustrated in FIG. 2, a user may "like," "attended," "played," "listened," "cooked," "worked at," or "watched" a concept, each of which may correspond to an edge type or subtype. A concept-profile interface corresponding to a concept node 204 may include, for example, a selectable "check in" icon (such as, for example, a clickable "check in" icon) or a selectable "add to favorites" icon. Similarly, after a user clicks these icons, the social-networking system 160 may create a "favorite" edge or a "check in" edge in response to a user's action corresponding to a respective action. As another example and not by way of limitation, a user (user "C") may listen to a particular song ("Imagine") using a particular application (SPOTIFY, which is an online music application). In this case, the social-networking system 160 may create a "listened" edge 206 and a "used" edge (as illustrated in FIG. 2) between user nodes 202 corresponding to the user and concept nodes 204 corresponding to the song and application to indicate that the user listened to the song and used the application. Moreover, the social-networking system 160 may create a "played" edge 206 (as illustrated in FIG. 2) between concept nodes 204 corresponding to the song and the application to indicate that the particular song was played by the particular application. In this case, "played" edge 206 corresponds to an action performed by an external application (SPOTIFY) on an external audio file (the song "Imagine"). Although this disclosure describes particular edges 206 with particular attributes connecting user nodes 202 and concept nodes 204, this disclosure contemplates any suitable edges 206 with any suitable attributes connecting user nodes 202 and concept nodes 204. Moreover, although this disclosure describes edges between a user node 202 and a concept node 204 representing a single relationship, this disclosure contemplates edges between a user node 202 and a concept node 204 representing one or more relationships. As an example and not by way of limitation, an edge 206 may represent both that a user likes and has used at a particular concept. Alternatively, another edge 206 may represent each type of relationship (or multiples of a single relationship) between a user node 202 and a concept node 204 (as illustrated in FIG. 2 between user node 202 for user "E" and concept node 204 for "SPOTIFY").

In particular embodiments, the social-networking system 160 may create an edge 206 between a user node 202 and a concept node 204 in the social graph 200. As an example and not by way of limitation, a user viewing a concept-profile interface (such as, for example, by using a web browser or a special-purpose application hosted by the user's client system 130) may indicate that he or she likes the concept represented by the concept node 204 by clicking or selecting a "Like" icon, which may cause the user's client system 130 to send to the social-networking system 160 a message indicating the user's liking of the concept associated with the concept-profile interface. In response to the message, the social-networking system 160 may create an edge 206 between user node 202 associated with the user and concept node 204, as illustrated by "like" edge 206 between the user and concept node 204. In particular embodiments, the social-networking system 160 may store an edge 206 in one or more data stores. In particular embodiments, an edge 206 may be automatically formed by the social-networking system 160 in response to a particular user action. As an example and not by way of limitation, if a first user uploads a picture, watches a movie, or listens to a song, an edge 206 may be formed between user node 202 corresponding to the first user and concept nodes 204 corresponding to those concepts. Although this disclosure describes forming particular edges 206 in particular manners, this disclosure contemplates forming any suitable edges 206 in any suitable manner.

Search Queries on Online Social Networks

In particular embodiments, the social-networking system 160 may receive, from a client system of a user of an online social network, a query inputted by the user. The user may submit the query to the social-networking system 160 by, for example, selecting a query input or inputting text into query field. A user of an online social network may search for information relating to a specific subject matter (e.g., users, concepts, external content or resource) by providing a short phrase describing the subject matter, often referred to as a "search query," to a search engine. The query may be an unstructured text query and may comprise one or more text strings (which may include one or more n-grams). In general, a user may input any character string into a query field to search for content on the social-networking system 160 that matches the text query. The social-networking system 160 may then search a data store 164 (or, in particular, a social-graph database) to identify content matching the query. The search engine may conduct a search based on the query phrase using various search algorithms and generate search results that identify resources or content (e.g., user-profile interfaces, content-profile interfaces, or external resources) that are most likely to be related to the search query. To conduct a search, a user may input or send a search query to the search engine. In response, the search engine may identify one or more resources that are likely to be related to the search query, each of which may individually be referred to as a "search result," or collectively be referred to as the "search results" corresponding to the search query. The identified content may include, for example, social-graph elements (i.e., user nodes 202, concept nodes 204, edges 206), profile interfaces, external web interfaces, or any combination thereof. The social-networking system 160 may then generate a search-results interface with search results corresponding to the identified content and send the search-results interface to the user. The search results may be presented to the user, often in the form of a list of links on the search-results interface, each link being associated with a different interface that contains some of the identified resources or content. In particular embodiments, each link in the search results may be in the form of a Uniform Resource Locator (URL) that specifies where the corresponding interface is located and the mechanism for retrieving it. The social-networking system 160 may then send the search-results interface to the web browser 132 on the user's client system 130. The user may then click on the URL links or otherwise select the content from the search-results interface to access the content from the social-networking system 160 or from an external system (such as, for example, a third-party system 170), as appropriate. The resources may be ranked and presented to the user according to their relative degrees of relevance to the search query. The search results may also be ranked and presented to the user according to their relative degree of relevance to the user. In other words, the search results may be personalized for the querying user based on, for example, social-graph information, user information, search or browsing history of the user, or other suitable information related to the user. In particular embodiments, ranking of the resources may be determined by a ranking algorithm implemented by the search engine. As an example and not by way of limitation, resources that are more relevant to the search query or to the user may be ranked higher than the resources that are less relevant to the search query or the user. In particular embodiments, the search engine may limit its search to resources and content on the online social network. However, in particular embodiments, the search engine may also search for resources or contents on other sources, such as a third-party system 170, the internet or World Wide Web, or other suitable sources. Although this disclosure describes querying the social-networking system 160 in a particular manner, this disclosure contemplates querying the social-networking system 160 in any suitable manner.

*Typeahead Processed and Queries*

In particular embodiments, one or more client-side and/or backend (server-side) processes may implement and utilize a "typeahead" feature that may automatically attempt to match social-graph elements (e.g., user nodes 202, concept nodes 204, or edges 206) to information currently being entered by a user in an input form rendered in conjunction with a requested interface (such as, for example, a user-profile interface, a concept-profile interface, a search-results interface, a user interface/view state of a native application associated with the online social network, or another suitable interface of the online social network), which may be hosted by or accessible in the social-networking system 160. In particular embodiments, as a user is entering text to make a declaration, the typeahead feature may attempt to match the string of textual characters being entered in the declaration to strings of characters (e.g., names, descriptions) corresponding to users, concepts, or edges and their corresponding elements in the social graph 200. In particular embodiments, when a match is found, the typeahead feature may automatically populate the form with a reference to the social-graph element (such as, for example, the node name/type, node ID, edge name/type, edge ID, or another suitable reference or identifier) of the existing social-graph element. In particular embodiments, as the user enters characters into a form box, the typeahead process may read the string of entered textual characters. As each keystroke is made, the frontend-typeahead process may send the entered character string as a request (or call) to the backend-typeahead process executing within the social-networking system 160. In particular embodiments, the typeahead process may use one or more matching algorithms to attempt to identify matching social-graph elements. In particular embodiments, when a match or matches are found, the typeahead process may send a response to the user's client system 130 that may include, for example, the names (name strings) or descriptions of the matching social-graph elements as well as, potentially, other metadata associated with the matching social-graph elements. As an example and not by way of limitation, if a user enters the characters "pok" into a query field, the typeahead process may display a drop-down menu that displays names of matching existing profile interfaces and respective user nodes 202 or concept nodes 204, such as a profile interface named or devoted to "poker" or "pokemon," which the user can then click on or otherwise select thereby confirming the desire to declare the matched user or concept name corresponding to the selected node.

More information on typeahead processes may be found in U.S. Patent Application No. 12/763162, filed 19 April 2010, and U.S. Patent Application No. 13/556072, filed 23 July 2012, which are incorporated by reference.

In particular embodiments, the typeahead processes described herein may be applied to search queries entered by a user. As an example and not by way of limitation, as a user enters text characters into a query field, a typeahead process may attempt to identify one or more user nodes 202, concept nodes 204, or edges 206 that match the string of characters entered into the query field as the user is entering the characters. As the typeahead process receives requests or calls including a string or n-gram from the text query, the typeahead process may perform or cause to be performed a search to identify existing social-graph elements (i.e., user nodes 202, concept nodes 204, edges 206) having respective names, types, categories, or other identifiers matching the entered text. The typeahead process may use one or more matching algorithms to attempt to identify matching nodes or edges. When a match or matches are found, the typeahead process may send a response to the user's client system 130 that may include, for example, the names (name strings) of the matching nodes as well as, potentially, other metadata associated with the matching nodes. The typeahead process may then display a drop-down menu that displays names of matching existing profile interfaces and respective user nodes 202 or concept nodes 204, and displays names of matching edges 206 that may connect to the matching user nodes 202 or concept nodes 204, which the user can then click on or otherwise select thereby confirming the desire to search for the matched user or concept name corresponding to the selected node, or to search for users or concepts connected to the matched users or concepts by the matching edges. Alternatively, the typeahead process may simply auto-populate the form with the name or other identifier of the top-ranked match rather than display a drop-down menu. The user may then confirm the auto-populated declaration simply by keying "enter" on a keyboard or by clicking on the auto-populated declaration. Upon user confirmation of the matching nodes and edges, the typeahead process may send a request that informs the social-networking system 160 of the user's confirmation of a query containing the matching social-graph elements. In response to the request sent, the social-networking system 160 may automatically (or alternately based on an instruction in the request) call or otherwise search a social-graph database for the matching social-graph elements, or for social-graph elements connected to the matching social-graph elements as appropriate. Although this disclosure describes applying the typeahead processes to search queries in a particular manner, this disclosure contemplates applying the typeahead processes to search queries in any suitable manner.

In connection with search queries and search results, particular embodiments may utilize one or more systems, components, elements, functions, methods, operations, or steps disclosed in U.S. Patent Application No. 11/503093, filed 11 August 2006, U.S. Patent Application No. 12/977027, filed 22 December 2010, and U.S. Patent Application No. 12/978265, filed 23 December 2010, which are incorporated by reference.

*Structured Search Queries*

In particular embodiments, in response to a text query received from a first user (i.e., the querying user), the social-networking system 160 may parse the text query and identify portions of the text query that correspond to particular social-graph elements. However, in some cases a query may include one or more terms that are ambiguous, where an ambiguous term is a term that may possibly correspond to multiple social-graph elements. To parse the ambiguous term, the social-networking system 160 may access a social graph 200 and then parse the text query to identify the social-graph elements that corresponded to ambiguous n-grams from the text query. The social-networking system 160 may then generate a set of structured queries, where each structured query corresponds to one of the possible matching social-graph elements. These structured queries may be based on strings generated by a grammar model, such that they are rendered in a natural-language syntax with references to the relevant social-graph elements. As an example and not by way of limitation, in response to the text query, "show me friends of my girlfriend," the social-networking system 160 may generate a structured query "Friends of Stephanie," where "Friends" and "Stephanie" in the structured query are references corresponding to particular social-graph elements. The reference to "Stephanie" would correspond to a particular user node 202 (where the social-networking system 160 has parsed the n-gram "my girlfriend" to correspond with a user node 202 for the user "Stephanie"), while the reference to "Friends" would correspond to friend-type edges 206 connecting that user node 202 to other user nodes 202 (i.e., edges 206 connecting to "Stephanie's" first-degree friends). When executing this structured query, the social-networking system 160 may identify one or more user nodes 202 connected by friend-type edges 206 to the user node 202 corresponding to "Stephanie". As another example and not by way of limitation, in response to the text query, "friends who work at facebook," the social-networking system 160 may generate a structured query "My friends who work at Facebook," where "my friends," "work at," and "Facebook" in the structured query are references corresponding to particular social-graph elements as described previously (i.e., a friend-type edge 206, a work-at-type edge 206, and concept node 204 corresponding to the company "Facebook"). By providing suggested structured queries in response to a user's text query, the social-networking system 160 may provide a powerful way for users of the online social network to search for elements represented in the social graph 200 based on their social-graph attributes and their relation to various social-graph elements. Structured queries may allow a querying user to search for content that is connected to particular users or concepts in the social graph 200 by particular edge-types. The structured queries may be sent to the first user and displayed in a drop-down menu (via, for example, a client-side typeahead process), where the first user can then select an appropriate query to search for the desired content. Some of the advantages of using the structured queries described herein include finding users of the online social network based upon limited information, bringing together virtual indexes of content from the online social network based on the relation of that content to various social-graph elements, or finding content related to you and/or your friends. Although this disclosure describes generating particular structured queries in a particular manner, this disclosure contemplates generating any suitable structured queries in any suitable manner.

More information on element detection and parsing queries may be found in U.S. Patent Application No.

13/556072, filed 23 July 2012, U.S. Patent Application No. 13/731866, filed 31 December 2012, and U.S. Patent Application No. 13/732101, filed 31 December 2012, each of which is incorporated by reference. More information on structured search queries and grammar models may be found in U.S. Patent Application No. 13/556072, filed 23 July 2012, U.S. Patent Application No. 13/674695, filed 12 November 2012, and U.S. Patent Application No. 13/731866, filed 31 December 2012, each of which is incorporated by reference.

*Generating Keywords and Keyword Queries*

In particular embodiments, the social-networking system 160 may provide customized keyword completion suggestions to a querying user as the user is inputting a text string into a query field. Keyword completion suggestions may be provided to the user in a non-structured format. In order to generate a keyword completion suggestion, the social-networking system 160 may access multiple sources within the social-networking system 160 to generate keyword completion suggestions, score the keyword completion suggestions from the multiple sources, and then return the keyword completion suggestions to the user. As an example and not by way of limitation, if a user types the query "friends stan," then the social-networking system 160 may suggest, for example, "friends stan**ford**," "friends stan**ford university**," "friends stan**ley**," "friends stan**ley cooper**," "friends stan**ley kubrick**," "friends stan**ley cup**," and "friends stan**lonski**." In this example, the social-networking system 160 is suggesting the keywords which are modifications of the ambiguous n-gram "stan," where the suggestions may be generated from a variety of keyword generators. The social-networking system 160 may have selected the keyword completion suggestions because the user is connected in some way to the suggestions. As an example and not by way of limitation, the querying user may be connected within the social graph 200 to the concept node 204 corresponding to Stanford University, for example by like- or attended-type edges 206. The querying user may also have a friend named Stanley Cooper. Although this disclosure describes generating keyword completion suggestions in a particular manner, this disclosure contemplates generating keyword completion suggestions in any suitable manner.

More information on keyword queries may be found in U.S. Patent Application No. 14/244748, filed 03 April 2014, U.S. Patent Application No. 14/470607, filed 27 August 2014, and U.S. Patent Application No. 14/561418, filed 05 December 2014, each of which is incorporated by reference.

Similarity Search Using Polysemous Codes

In particular embodiments, the social-networking system 160 may perform an approximate nearest neighbor search in the compressed domain. The search may use polysemous codes, which offer both the distance estimation quality of product quantization and the efficient comparison of binary codes with Hamming distance. At search time, this dual interpretation using channel-optimized vector quantizers may accelerate the search. Most of the indexed vectors may be filtered out with Hamming distance, letting only a fraction of the vectors to be ranked with an asymmetric distance estimator.

The method may be complementary with a coarse partitioning of the feature space such as the inverted multi-index. This is shown by experiments performed on several public benchmarks such as the BIGANN dataset comprising one billion vectors, which report state-of-the-art results for query times below 0.3 millisecond per core. The approach may allow the approximate computation of the $k$-nearest neighbor ($k$-NN) graph associated with the Yahoo Flickr Creative Commons 100M, described by CNN image descriptors, in less than 8 hours on a single machine.

Nearest neighbor search, or more generally similarity search, has received a attention from different research communities in the last decades. The computer vision community has been especially active on this subject, which is of utmost importance when dealing with very large visual collections.

While early approximate nearest neighbor (ANN) methods were mainly optimizing the trade-off between speed and accuracy, many recent works put memory requirements as a central criterion for several reasons. For instance, due to the memory hierarchy, using less memory means using faster memory: disks are slower than the main memory, the main memory is slower than CPU caches, etc. Accessing the memory may be the bottleneck of the search. Therefore algorithms using compact codes are likely to offer a better efficiency than those relying on full vectors. For these reasons, embodiments focus on ANN search with compact codes, which are able to make search in vector sets comprising as much as one billion vectors on a single machine.

There have been two separate lines of research in ANN with compact codes. The first class of methods proposes to map the original vectors to the Hamming hypercube. The resulting bit-vectors are efficiently compared with the Hamming distance thanks to optimized low-level processor instructions such as xor and popcnt, available both on CPUs and GPUs. Another approach is to adopt a quantization point of view to achieve a better distance estimation for a given code size. While these two classes of approaches are often seen as contenders, they both have their advantages and drawbacks. Binary codes offer a faster elementary distance computation and do not need external meta-data once the codes are produced. In contrast, quantization-based approaches achieve better memory/accuracy operating points.

In particular embodiments, the polysemous codes described herein offer the best of both worlds. They can be compared either with binary codes, which is especially useful in a filtering step, or with the asymmetric distance estimator of product quantization approaches. The key aspect to attain this dual interpretation is the learning procedure. The present approach involves channel-optimized vector quantization.

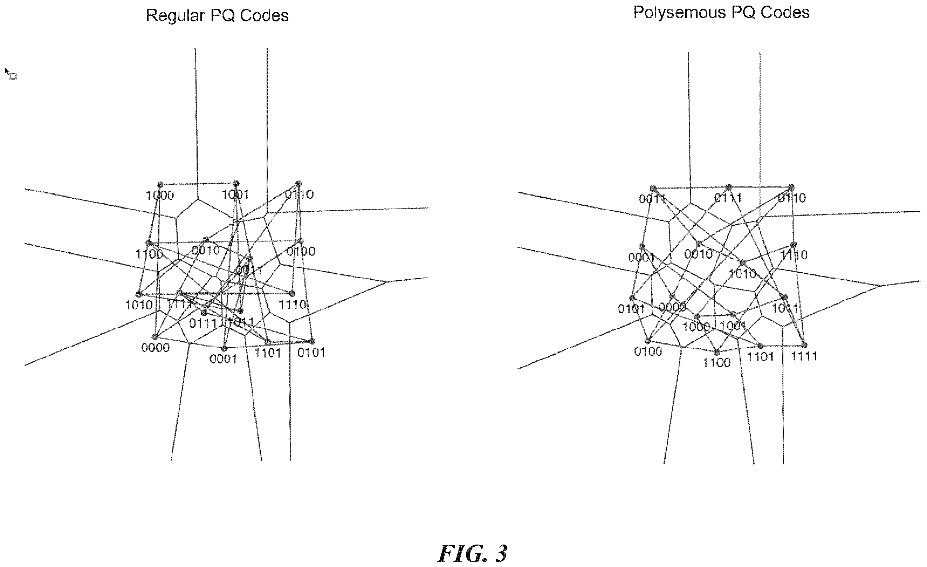

In particular embodiments, social-networking system 160 may receive, from a client system of a first user, a query, wherein the query is represented by an n-dimensional vector in an n-dimensional vector space. In particular embodiments, the social-networking system 160 may divide the vector into a plurality of subvectors and quantizes each of the plurality of subvectors using a plurality of subquantizers, wherein each quantized subvector is represented by a vector code. The approach is to thus train a product quantizer. In particular embodiments, social-networking system 160 may translate the vector codes representing the quantized subvectors into polysemous codes representing the query, wherein each polysemous code represents one of the quantized subvectors. In this manner, it optimizes the so-called "index assignment" of the centroids to binary codes. In other terms, the methods may reorder the numeration of the centroids such that distances between similar centroids are small in the Hamming space, as illustrated in **FIG. 3.**

In particular embodiments, translating the vector codes into polysemous codes comprises learning a permutation of bits such that binary comparison of the polysemous codes reflects inter-centroid distances of the quantized subvectors. FIG. 3 illustrates the re-ordering of the numeration of the centroids such that distances between similar centroids are small in the Hamming space, according to particular embodiments. Polysemous codes are compact representations of vectors that can be compared either with product quantization (222M distance evaluations per second per core for 8-byte codes) or as binary codes (1.19G distances per second). To obtain this property, the assignment of quantization indexes to bits may be optimized such that closest centroids have a small Hamming distance. The figure shows $k$-means centroids (learned on points uniformly drawn in $[0,1] \times [0,1]$) and their corresponding binary representations. As can be observed, the codes differing by one bit (connected by red segments in the figure) generally correspond to close centroids after the optimization (FIG. 3, *right*), which is not the case for standard PQ codes (FIG. 3, *left*).

As a result, the present method is almost on par both with quantization-based methods in terms of accuracy and binary methods with respect to search efficiency. When combining this approach with a complementary approach such as the inverted multi-index, the present method may outperform the state of the art by a large margin, as shown by experiments carried out on several large public benchmarks. Interestingly, the high efficiency of the present approach offers a scalable solution to the all-neighbor problem, i.e., to compute the $k$-NN graph, for the large image collection Flickr 100M described by 4,096 dimensional vectors.

Approximate Nearest Neighbor with Compact Codes

**Compact binary codes.** Locality-Sensitive hashing is a pioneering binary encoding technique. Under some assumptions the Hamming distance is statistically related to the cosine similarity (equivalently the Euclidean distance for normalized vectors). Brute-force comparison of binary hashes has been seen as a viable option for efficient image search with memory constraints, which was popularized by subsequent works evidencing the scalability of this approach to million-sized image collections. Many approaches have been proposed to speed up the search in this Hamming space, such as spectral hashing or iterative quantization (ITQ). For example, $k$-means hashing method first produces a vector quantizer where the produced codes are compared with the Hamming distance.

**Quantization-based codes.** Several works have primarily focused on optimizing the trade-off between memory and distance estimation. In particular, it is shown that vector quantizers satisfying the Lloyd conditions offer statistical guarantees on the square Euclidean distance estimator, which is bounded in expectation by the quantizer squared loss. These quantization-based methods include product quantization (PQ) and its optimized versions "optimized product quantization" and "Cartesian $k$-means."

These approaches are effective for approximate search within large collections of visual descriptors. Subsequent works have pushed possible memory/efficiency trade-off by adopting a more general point of view, such as "Additive quantization," which provides an excellent approximation and search performance, yet obtained with a much higher computational encoding cost. In between PQ and this general formulation, good trade-offs are achieved by residual quantizers, which are routinely used in the non-exhaustive PQ variant to reduce the quantization loss by encoding the residual error vector instead of the original vector, but also as a coding strategy on its own.

**Hybrid methods.** The aforementioned methods for ANN search limit the memory usage per indexed vector and provide a distance estimator that is faster to compute than the exact distance. However, the search is still exhaustive in the sense that the query is compared to all database elements. For billion-sized collections, reading the codes in memory is a severe constraint leading to search times in the order of a second, typically. The limitation imposed by this memory bottleneck has led to two-stage approaches, in which the feature space is first partitioned through hashing or clustering. Practically, an inverted list storing identifiers and corresponding compact codes is stored for each region. At query time, the distance is estimated only for the codes associated with a subset of regions. It is also possible to use multiple partitions as in early LSH papers, as done in joint inverted indexing. These solutions however require several indexing structures, are therefore not competitive with respect to the trade-off between memory and accuracy. Various partitioning methods have been proposed for the coarse level. In particular, the inverted multi-index uses product quantization both to define the coarse level and for coding residual vectors. This strategy offers state-of-the-art performance when further combined with a reranking strategy based on codes.

**Binary codes versus quantization-based approaches.** The Hamming distance is significantly faster to evaluate than the distance estimator based on table look-ups involved in quantization methods. For example, the acceleration factor may be between 4.6x and 6.6x, depending on the code length. However, binary methods suffer limitations imposed by the Hamming space. First, the number of possible distances is at most $d$+1, where $d$ is the binary vector length. This problem is partially solved by asymmetric variants of LSH, whose estimations use compact codes for database vectors but not on the query side. Yet such asymmetric measures require look-ups, like the methods derived from product quantization, and are therefore more expensive to evaluate than the Hamming distance. On the other hand, quantization-based methods offer a better memory/accuracy compromise, which is expected since binarization is a particular case of quantization.

Binary and quantization-based codes have their own advantages and drawbacks. While the literature usually presents binary and quantized-based codes as concurrent methods, the next section introduces methods that benefits from the advantages of both classes of methods.

Approximate Nearest Neighbor with Polysemous Codes

In particular embodiments, a method may take advantage of the fast computation of Hamming distances while offering the estimation accuracy of quantization-based methods. In particular embodiments, the method learn a regular product quantizer and then to optimizes the assignment of centroid indexes to binary codes such that the Hamming distance approximates the inter-centroid distance. In this section, we first describe the objective functions optimized to achieve this property, and then describe the optimization algorithm.

In particular embodiments, social-networking system 160 may divide the vector into a plurality of subvectors comprises decomposing the n-dimensional vector space into a plurality of product subspaces, wherein a distance between vectors is equivalent to the sum of the distances between corresponding subvectors in the product subspaces. In particular embodiments, for a product quantizer, one optimizes separately each of the constituent subquantizers. In particular embodiments, each of the subquantizers is distinct from each other subquantizer of the plurality of subquantizers. Therefore, in what follows, we have one objective function (and optimization process) per subquantizer.

*Objective Functions*

We consider two objective functions: one that minimizes a loss based on the distance estimator and one that minimizes a ranking loss.

**Notation.** A quantizer is usually described by its set of centroids. Let $\mathcal{J}$ be the set of centroid indexes: $\mathcal{J} = \{0, 1, \dots, 2^d - 1\}$ and $d$=8 if each (sub-)quantizer encodes the original vectors on one byte as is standard practice. Let $c_i$ be the reproduction value associated with centroid $i$. Let $d : \mathbb{R}^D \times \mathbb{R}^D \to \mathbb{R}$ be a distance between centroids, for instance the Euclidean distance. Let $\pi : \mathcal{J} \to \{0,1\}^d$ denote a bijective function that maps each centroid index to a different vertex of the unit hypercube. Finally let $h : \{0,1\}^d \times \{0,1\}^d \to \mathbb{R}$ be the Hamming distance between two $d$ dimensional binary representations.

**Distance estimator loss.** One possible objective is to find the bijective map $\pi$ such that the distance $d(ci,cj)$ between two centroids is approximated by the Hamming distance $h(\pi(i),\pi(j))$ between the two corresponding binary codes:

$$\pi^* = \operatorname*{argmax}_{\pi} \sum_{i \in \mathcal{J}, j \in \mathcal{J}} \left[ h\big(\pi(i), \pi(j)\big) - f\left(d\big(c_i, c_j\big)\right) \right]^2$$

where $f : \mathbb{R} \to \mathbb{R}$ is a monotonously increasing function that maps the distance $d(ci,cj)$ between codewords into a range comparable to Hamming distances. In practice, we choose for $f$ a simple linear mapping. This choice is motivated by the following observations. The Hamming distance between two binary vectors randomly drawn from $\{0,1\}^d$ follows a binomial distribution with mean $d/2$ and variance $d/4$. Assuming that the distribution of distances $d(c_i, c_j)$ can be approximated by a Gaussian distribution - which is a good approximation of the binomial -with mean $\mu$ and standard deviation $\sigma$ we can map these two distributions by mapping their means and variances. This yields:

$$f(x) = \frac{\sqrt{d}}{2\sigma}(x - \mu) + \frac{d}{2}$$

where $\mu$ and $\sigma$ are measured empirically.

As, in the context of $k$-NN, it is more important to approximate small distances than large ones, we found out in practice that it is beneficial to weight the distances in the objective function. This leads to a weighted objective:

$$\pi^* = \underset{\pi}{\operatorname{argmax}} \sum_{i \in \mathcal{J}, j \in \mathcal{J}} w\left(f\left(d(c_i, c_j)\right)\right)\left[h\left(\pi(i), \pi(j)\right) - f\left(d(c_i, c_j)\right)\right]^2$$

We choose a function $w : \mathbb{R} \to \mathbb{R}$ of the form $w(u) = \alpha^u$ with $\alpha < 1$. In our experiments, we set $\alpha = 1/2$ but we found out that values of $\alpha$ in the range [0.2, 0.6] yielded similar results.

**Ranking loss.** In the context of $k$-NN search, we are interested in finding a bijective map $\pi$ that preserves the ranking of codewords. For this purpose, we adopt an Information Retrieval perspective. Let $(i,j)$ be a pair of codewords such that $i$ is assumed to be a "query" and $j$ is assumed to be "relevant" to $i$. We will later discuss the choice of (query,relevant) pairs. We take as negatives for query $i$ the codewords $k$ such that $d(ci,cj) < d(c_i, c_k)$. The loss for pair $(i,j)$ may be defined as:

$$r_\pi(i, j) = \sum_{k \in \mathcal{J}} \mathbb{1}\left[d(c_i, c_j) < d(c_i, c_k)\right]\mathbb{1}\left[h\left(\pi(i), \pi(j)\right) > h\left(\pi(i), \pi(k)\right)\right]$$

where

$$\mathbb{1}[u] = 1$$

if $u$ is true, 0 otherwise. It measures how many codewords $k$ are closer to $i$ than $j$ according to the Hamming distance while $i$ is closer to $j$ than $k$ according to the distance between centroids. We note that the previous loss measures the number of correctly ranked pairs which is closely related to Kendall's tau coefficient.

An issue with the loss $r_\pi(i,j)$ is that it gives the same weight to the top of the list as to the bottom. However, in ranking problems it is desirable to give more weight to errors occurring in the top ranks. Therefore, we do not use directly the loss $r_\pi(i,j)$ for the pair $(i,j)$, but adopt instead a loss that increases sublinearly with $r_\pi(i,j)$. More specifically, we introduce a monotonously decreasing sequence $\alpha_i$ as well as the sequence $\ell_j = \sum_{i=1}^{j} \alpha_i$, which increases sublinearly with $j$. We define the weighted loss for pair $(i,j)$ as $\ell_{r_\pi}(i,j)$.

A subsequent question is how to choose pairs $(i,j)$. One possibility would be to choose $j$ among the $k$-NNs of $i$, in which case we would optimize

$$\pi^* = \underset{\pi}{\operatorname{argmin}} \sum_{i \in \mathcal{J}} \sum_{j \in k-NN(i)} \ell_{r_\pi}(i, j).$$

An issue with this approach is that it requires choosing an arbitrary length $k$ for the NN list. An alternative is to consider all $j \neq i$ as being potentially "relevant" to $i$ but to downweight the contribution of those $j$'s which are further away from *i*. In such a case, we optimize

$$\pi^* = \operatorname*{argmin}_{\pi} \sum_{i \in I, j \in \mathcal{J}} \alpha_{r(i,j)} \ell_{r_{\pi(i,j)}},$$

where we recall that $\alpha_i$ is a decreasing sequence and $r(i,j)$ is the rank *of j* in the ordered list of neighbors to *i*:

$$r(i,j) = \sum_{k \in \mathcal{J}} \mathbb{1}\big[d\big(c_i, c_j\big) < d\big(c_i, c_k\big)\big].$$

In all our ranking experiments, we use the equation

$$\pi^* = \operatorname*{argmin}_{\pi} \sum_{i \in I, j \in \mathcal{J}} \alpha_{r(i,j)} \ell_{r_{\pi(i,j)}},$$

and choose $\alpha_i$ = 1/*i.*

*Optimization*

The aforementioned objective functions aim at finding a bijective map $\pi$, or equivalently another numeration of the set of PQ centroids, that would assign similar binary codes to neighboring centroids.

This problem is similar to that of channel optimized vector quantization, for which researchers have designed quantizers such that the corruption of a bit by the channel impacts the reconstruction as little as possible. This is a discrete optimization problem that can not be relaxed, and for which we can only target a local minimum, as the set of possible bijective maps is huge. In the coding literature, such index assignment problems were first optimized in a greedy manner, for instance by using the binary switching algorithm. Starting from an initial index assignment, at each iteration, this algorithm tests all possible bit swaps (i.e., *d*), and keeps the one providing the best update of the objective function. However, this strategy may rapidly get trapped in a poor local minimum. To our knowledge, the best approach to index assignment problems is to employ simulated annealing to carry out the optimization.

The algorithm aims at optimizing a loss $L(\pi)$ that depends on the bijective mapping $\pi$ defined as a table of size $2^d$. It proceeds as follows

1. Initialize
2. current solution $\pi$ := [0,...., $2^d$ - 1]
3. temperature *t* := to
4. Iterate $N_{iter}$ times:
5. draw $i, j \in \mathcal{J}$, $i \neq j$ at random
6. $\pi'$ : = $\pi$, with entries *i* and *j* swapped
7. compute the cost update $\Delta C := L(\pi') - L(\pi)$
8. if $\Delta C$ < 0 or at random with probability *t*:
9. accept the new solution $\pi := \pi'$
10. $t := t \times t_{decay}$

The algorithm depends on the number of iterations $N_{iter}$ = 500,000, the initial "temperature" to = 0.7 and $t_{decay}$ = $0.9^{1/500}$, i.e., a decrease by a factor 0.9 every 500 iterations. Evaluating the distance estimation loss (resp ranking loss) has a complexity in $O(2^{2d})$ (resp. $O(2^{3d})$). However, computing the cost update incurred by a swap can be implemented in $O(2^{2d})$ (resp. $O(2^{2d})$).

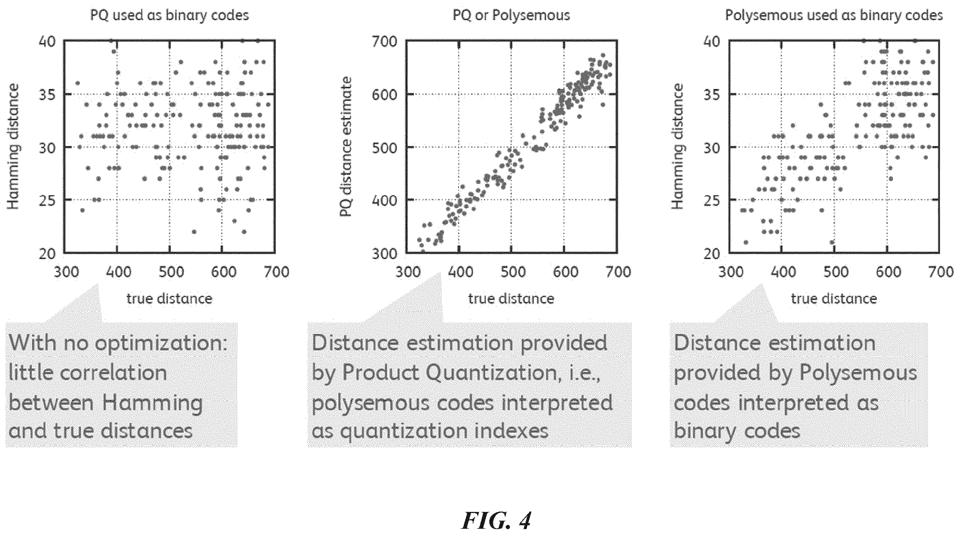

**FIG. 4** illustrates a comparison of the codes used as binary vectors before and after optimization. As FIG. 4 shows, the Hamming distances are more correlated with the true distance after than before the optimization. On the left, FIG. 4 shows true distances vs. distance estimates with PQ codes. On the middle, FIG. 4 shows true distances vs. Hamming distances before polysemous optimization. On the right, FIG. 4 shows true distances vs. Hamming distances after polysemous optimization. The binary comparison with Polysemous is much more discriminative, while offering the same estimation when being interpreted as PQ codes.

*Discussion*

Although the optimization algorithm is similar to those previously employed in channel-optimized vector quantization, our objective functions are significantly different to reflect our application scenario. In communications, it is unlikely that many bit errors occur simultaneously, in particular not on a memoryless channel. Therefore the objective functions employed in communication focus on small Hamming distances. In contrast, for ANN the typical Hamming distances of the neighbors are relatively large.

In particular embodiments, social-networking system 160 may calculate, based on the translated polysemous codes, a Hamming distance between the quantized subvectors and each of a plurality of corresponding subvectors of vectors representing a plurality of content objects. While the proposed binarized PQ codes offer a competitive performance, their accuracy is significantly lower than that of PQ. This suggests a two-step strategy for large-scale search. Given a query, we first filter out the majority of the database items using the fast Hamming distance on the binarized PQ codes. We then evaluate the more costly asymmetric distances for the items whose Hamming distance was below a given threshold $\tau$. In particular embodiments, social-networking system 160 may determine, from among a subset of content objects represented by a plurality of subvectors having a calculated Hamming distance less than a threshold distance, a content object having an approximate closest vector, the determining being based on one or more lookup and addition operations between the translated polysemous codes representing the query and corresponding polysemous codes representing the content object. For example, determining a content object having an approximate closest vector may comprises calculating a shortest inter-centroid distance between the quantized subvectors and the subvectors representing the subset of content objects.

In particular embodiments, calculating the shortest inter-centroid distance between the quantized subvectors and the subvectors representing the subset of content objects is performed using additive quantization. For example, social-networking system 160 may retrieve, for each content object in the subset of content objects, inter-centroid distances between the quantized subvectors and the subvectors representing the content object from the pre-generated lookup table. Social-networking system 160 may calculate, for each content object in the subset of content objects, the approximate distance between the vector representing the query and a vector representing the content object by adding the inter-centroid distances between the quantized subvectors and corresponding subvectors representing content object and determine a shortest of calculated approximate distances.

Other strategies could be contemplated for the filtering stage. One such strategy is to measure how many quantization indexes differ for the product quantizer. Formally, this quantity is also called Hamming distance, but measured between vector of indexes and not binary vectors. In other terms, one can filter out vectors if more than a given number of subquantizers produce indexes not identical to those of the queries. As shown in the experimental section, this method is not as efficient nor precise as the strategy proposed in this section.

Another such strategy would be to use for the filtering stage a binary encoding technique unrelated to PQ, e.g., ITQ. The issue is that it would increase the memory requirements of the method as it would involve storing ITQ codes and PQ codes. In contrast, we only store one polysemous code per database item in the proposed approach-a must if the emphasis is on storage requirements. In particular embodiments, each content object is represented by an n-dimensional vector in the n-dimensional vector space, the vector representing the content object being divided into a plurality of subvectors. For example, the plurality of subvectors representing the of content object are quantized using the plurality of subquantizers for the corresponding product subspaces.

Experiments

This section gives an analysis and evaluates our polysemous codes. After introducing the evaluation protocol, we analyze our core approach in different aspects. Then we show that our approach is compatible with the inverted multi-index (IMI) and give a comparison against the state of the art.

*Evaluation protocol*

We analyze and evaluate our approach with standard benchmarks for ANN as well as a new benchmark that we introduce to evaluate the search quality.

**SIFT1M** is a benchmark of 128-dimensional SIFT descriptors. There are one million vectors in the database, plus 100,000 vectors for training and 10,000 query vectors. This is a relatively small set that we mainly use for parameter analysis.

**BIGANN** is a large-scale benchmar widely used for ANN search, also made of SIFT descriptors. It comprises one billion database vectors, 100 million training vectors and 10,000 queries.

FYCNN1M and FYCNN90M are introduced to evaluate the quality of the search with more challenging features. We leverage the Yahoo Flickr Creative Commons 100M image collection as follows. In FYCNN90M, we split the dataset into three sets: 90M vectors are to be indexed, 10k vectors serve as queries, 5M vectors are used for training. FYCNN1M uses the same training set and queries, but the indexed set is restricted to the first million images for the purpose of analyzing our method. We extract convolutional neural networks features following these guidelines: we compute the activations of the 7th layer of AlexNet. This yields 4096-dimensional image descriptors. Prior to indexing we reduce these descriptors to 256D with PCA and subsequently apply a random rotation.

For all datasets, the accuracy is evaluated by recall@R. This metric measures the fraction of the queries for which the true nearest neighbor is returned within the top R results. All reported times are on a single core of a 2.8GHz machine.

*Analysis of Polysemous codes performance*

We first analyze the performance of polysemous codes. Let us introduce notations. We first consider three ways of constructing a product quantizer:

**PQ** is the baseline: we directly use the code produced by the product quantizer, without any optimization of the index assignment;
**Polyd** refers to a product quantizer whose index assignment is optimized by minimizing the distance estimator loss;
**Polyr** similarly refers to a PQ optimized with the proposed ranking loss.

Once the codebook and index assignment are learned, we consider the following methods to estimate distances based on polysemous codes:

**ADC** is the regular comparison based on an asymmetric distance estimator;
**binary** refers to the bitwise comparison with the Hamming distance when the codes are regarded as bitvectors, like for binary codes (*e.g.,* ITQ);
**disidx** counts how many subquantizers give different codes;
**dual** refers to the strategy employing both interpretations of polysemous codes: the Hamming codes are used to filter-out the database vectors whose distance to the query is above a threshold $\tau$. The indexed vectors satisfying this test are compared with the asymmetric distance estimator.

Note: Polysemous codes are primarily PQ codes. Therefore the performance of polysemous codes and regular PQ is identical when the comparison is independent from the index assignment, which is the case for ADC and disidx. For instance the combinations Polyd/ADC, Polyr/ADC and PQ/ADC are equivalent both in efficiency and accuracy.

**Table 1**

|  | R@1 | R@100 | R@1 | R@100 | query(ms) |
| --- | --- | --- | --- | --- | --- |
| PQ/disidx | 0.071±0.001 5 | 0.281±0.004 3 | 0.031±0.001 6 | 0.284±0.001 7 | 3.66±0.0 1 |
| PQ/binary | .036±.0010 | 0.129±0.002 8 | 0.015±0.000 4 | 0.124±0.001 4 | 1.42±0.0 1 |
| PolyD/binary | 0.107±0.001 9 | 0.503±.0047 | 0.027±0.001 3 | 0.281±0.001 7 | 1.45±0.0 5 |
| PolyR/binary | 0.105±0.002 6 | 0.467±0.001 9 | 0.022±0.001 0 | 0.222±0.002 6 | 1.45±0.0 3 |
| PQ/dual(r=55) | 0.3 12±0.5 07 | 0.5 07±0.008 0 | 0.116±0.001 9 | 0.522±0.004 7 | 2.59±0.0 3 |
| PolyD/dual(r=51) | 0.441±0.987 | 0.987±0.001 2 | 0.132±0.001 4 | 0.804±0.001 7 | 2.53±0.0 5 |
| PolyR/dual(r=53) | 0.439±0.960 | 0.960±0.002 0 | 0.130±0.0013 | 0.745±0.002 6 | 2.47±0.0 5 |
| Baseline: LSH | 0.114±0.576 | 0.576±0.002 9 | 0.089±0.001 7 | 0.643±0.002 3 | 1.45±0.0 5 |
| Baseline: ITQ | 0.13 5±0.6 88 | 0.68 8±0.003 9 | 0.088±0.001 4 | 0.654±0.005 4 | 1.45±0.0 5 |
| Baseline: PQ | 0.442±0.997 | 0.997±0.000 0 | 0.13 3±0.0011 | 0.838±0.001 4 | 9.01±0.0 1 |

In particular embodiments, the polysemous codes may be 16 bytes/vector. The performance of disidx may not depend on the index assignment. We give the performance of codes when compared in binary, before (PQ/binary) and after (Polyd/binary and Polyr/binary) our optimization. Then we present the results for the proposed polysemous dual strategy, which are almost as accurate as PQ while approaching the speed of binary methods. The Hamming thresholds are adjusted on the training sets so that the Hamming comparison filters out at least 95% of the points. The results are averaged over 5 runs, the sources of randomness being the k-means of the PQ training and the simulated annealing. The last 3 rows are baselines provided for reference: LSH, ITQ and PQ. LSH uses a random rotation instead of random projection for better performance.

Table 1 details the performance of the aforementioned PQ constructions. First, note that the accuracy of disidx is low, and that it is also relatively slow due to the lack of a dedicated machine instruction. Second, these results show that our index assignment optimization is very effective for improving the quality of the binary comparison. Without this optimization, the binary comparison is ineffective both to rank results (PQ/binary, and to filter (PQ/dual). The ranking loss Polyr is slightly inferior to Polyd, so we adopt the latter in the following.

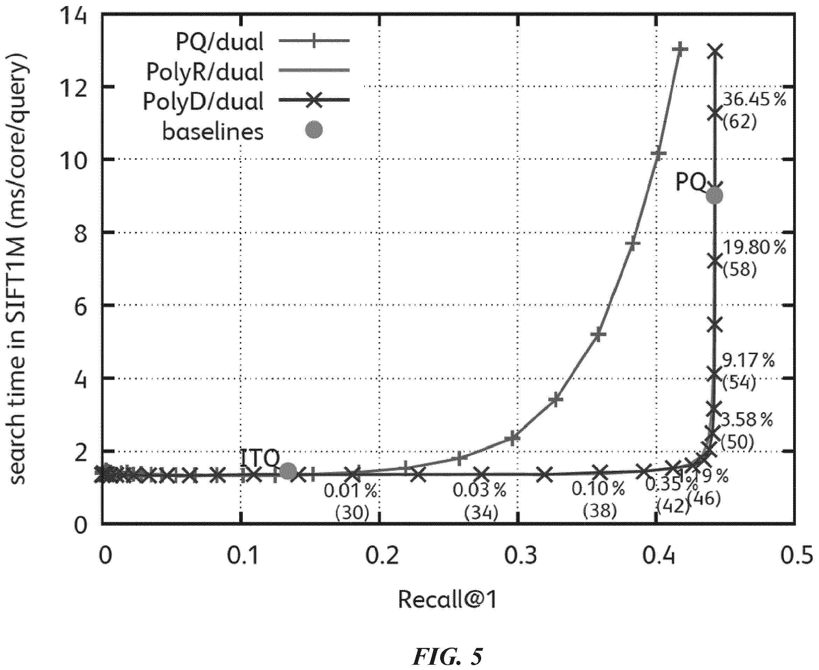

**FIG. 5** illustrates the impact of the Hamming threshold on the dual strategy, in particular embodiments. For example, FIG. 5 shows Recall@1 vs search speed for the SIFT1M dataset, with 128 bits (16 subquantizers). The operating points for polysemous are parametrized by the Hamming threshold (in parenthesis), which influences the rate of points kept for PQ distance estimation. The tradeoffs obtained without polysemous optimization PQdual) and two baselines (ITQ and PQ) are given for reference.

FIG. 5 illustrates the relevance of Polyd/dual. It gives the performance achieved by this method for varying Hamming thresholds $\tau$, which parametrizes the trade-off between speed and accuracy. Polysemous codes allow us to make almost no compromise: attaining the quality of PQ/ADC only requires a minor sacrifice in search time compared to binary codes. With threshold $\tau = 54$, 90-95% of the points are filtered out; for $\tau = 42$ this raises to more than 99.5%.

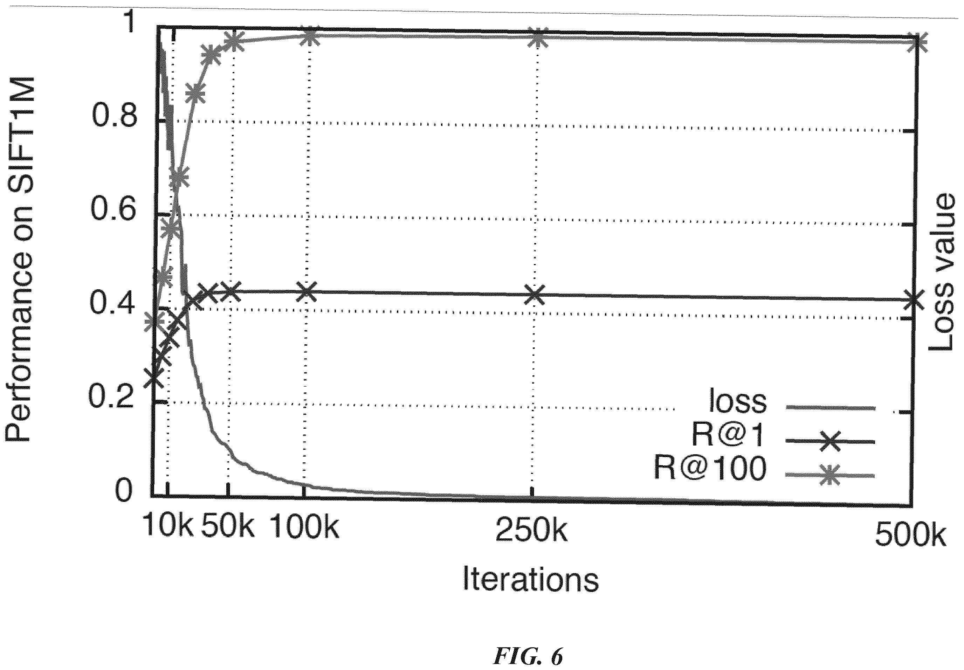

**FIG. 6** shows the performance of polysemous codes (dual, $\tau = 52$, 128 bits) along the iterations for the distance-based objective function (results with the ranking loss are similar). Note that the initial state (0 iteration) corresponds to a product quantizer not yet optimized with our method.

FIG. 6 shows the performance of the binary filtering as a function of the number of iterations. The algorithm typically converges in a few hundred thousand iterations (1 iteration = 1 test of possible index swaps). For a set of PQ subquantizer with 256 centroids each, this means a few seconds for the distance reconstruction loss PolyR and up to one hour for the ranking loss PolyR.

*Comparison with the State of the Art*

For large datasets the best trade-offs between accuracy, search time and memory are obtained by hybrid methods that combine a preliminary space partitioning, typically implemented through clustering, with compact codes learned on residual vectors. That is why we combine our polysemous codes with IMI. This method partitions the space with a product quantizer (the "coarse" partitioning level) and uses PQ to encode residual error vectors. The search proceeds by selecting a few inverted lists at the coarse level, and then use the residual PQ codes to estimate distances for the vectors associated with the selected lists. In particular embodiments, inter-centroid distances between the quantized subvectors and the subvectors representing the subset of content objects are retrieved from a pre-generated lookup table. We further optimize the computation of the lookup tables involved in PQ when multiple lists are probed.

**Table 2**

| | K | probes/cap | Code size 8 bytes | | | | Code size 16 bytes | | | |
|---|---|---|---|---|---|---|---|---|---|---|
| | | | R@1 | R@100 | time(ms) | | R@1 | R@2 | time(ms) | |
| IMI | $16384^2$ | -/10k | 0.158 | 0.706 | 6 | | 0.304 | 0.740 | 7 | |
| IMI | $16384^2$ | -/20k | 0.164 | 0.813 | 13 | | 0.328 | 0.885 | 13 | |
| IMI* | $16384^2$ | 1024/10k | 0.0159 | 0.719 | 1.57 | 2.58 | 0.313 | 0.753 | 1.92 | 2.89 |
| IMI* | $4096^2$ | 1024/10k | 0.125 | 0.550 | 0.99 | 1.23 | 0.255 | 0.576 | 1.16 | 1.44 |
| IMI* | $4096^2$ | 16/10k | 0.115 | 0.462 | 0.50 | 0.75 | 0.226 | 0.479 | 0.64 | 0.88 |

(continued)

| | | | Code size 8 bytes | | | | Code size 16 bytes | | | |
|---|---|---|---|---|---|---|---|---|---|---|
| IMI+PolyD+ADC | 4096² | 16/10k | 0.103 | 0.332 | 0.27 | 0.51 | 0.206 | 0.397 | 0.33 | 0.58 |
| IMI* | 16384² | 1024/30k | 0.162 | 0.796 | 2.20 | 3.15 | 0.330 | 0.856 | 2.77 | 3.75 |
| IMI* | 4096² | 1024/30k | 0.134 | 0.696 | 1.35 | 1.61 | 0.295 | 0.755 | 1.77 | 2.07 |
| IMI* | 4096² | 16/30k | 0.117 | 0.505 | 0.59 | 0.81 | 0.238 | 0.532 | 0.75 | 1.01 |
| IMI*+PolyD+ADC | 4096² | 16/30k | 0.106 | 0.370 | 0.33 | 0.56 | 0.217 | 0.447 | 0.38 | 0.64 |

Table 2 shows a comparison against the state of the art on BIGANN (1 billion vectors). We cap both the maximum number of visited lists and number of distance evaluations (column probes/cap). For the timings, using our improved implementation (*), the first number is for queries performed in batch mode, while the second corresponds to a single query at a time. Our polysemous method is set to filter out 80% of the codes.

Building upon this method, we learn polysemous codes for the residual PQ, which allows us to introduce an intermediate stage to filter out most of the list items, hence avoiding most of the distance estimation with PQ. Table 2 gives a comparison against state-of-the-art algorithms on the BIGANN dataset. We report both the timings reported for concurrent methods and our improved re-implementation of IMI. Note already that our system obtains very competitive results compared to the original IMI. Note, in the case where a single query vector is searched at a time, as opposed to batch mode, the coarse quantization becomes 50 to 60% more expensive. Therefore, in the following we use $K = 4096^2$ to target more aggressive operating points by reducing the fixed cost of the coarse quantizer. In this case, the results of Polyd/dual gives a clear improvement compared to IMI and the state of the art. In particular, with 16 bytes we are able to achieve a recall@1=0.217 in less than 1 ms on one core (0.38 ms in single query mode, 0.64 ms in batch mode). The binary filter divides by almost 2 the search time, inducing only a small reduction of the Recall@1 score.

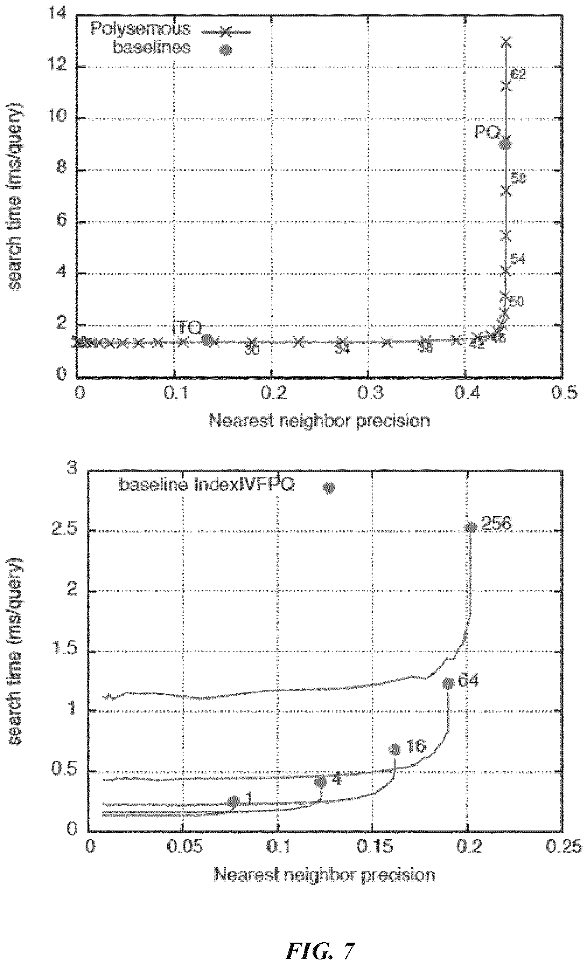

FIG. 7 illustrates the performance of various methods on the FYCNN90M benchmarks, according to particular embodiments. We use 20 bytes per vector (128 bits for the code and 4 bytes per identifier), i.e, per indexed image. Above: for reference we give results obtained by methods that exhaustively compare the query to all vectors indexes based on their codes. As to be expected, the non-exhaustive methods (below) achieve much better performance, especially when probing a large number of inverted lists (see "probe 256"). Our proposal IMI+PolyD/dual offers the best trade-off between memory, search time and accuracy by a fair margin.

In the FYCNN90M benchmark, a single query amounts to searching an image in a collection containing 90 million images. FIG. 7 illustrates the performance achieved by different methods. First observe that the non-exhaustive methods (bottom) are at least 2 orders of magnitude faster than the methods that compare the codes exhaustively (top), like ITQ. The former are able to find similar images in a few seconds. Again, our polysemous strategy IMI+PolyD/dual offers a competitive advantage over its competitor IMI. Our method is approximately 1.5 times faster for a negligible loss in accuracy.

Example Application: Large-Scale *k*-NN Image Graph

In particular embodiments, the content objects may be images or videos, and the methods described herein may be used to find *k* most similar images or videos to a query image or video in a database.

For example, an application to this fast indexing scheme may be the problem of building the approximate *k*-NN graph of a very large image collection. For this experiment, we make use of the 95,063,295 images available in the Flickr 100M dataset. We use 4,096D AlexNet features reduced to 256D with PCA. For the graph construction, we simply compute the *k*-NN with *k*=100 for each image in turn. This takes 7h44 using 20 threads of a CPU server. Note that the collection that we consider is significantly larger than the ones considered in previous works on *k*-NN graph.

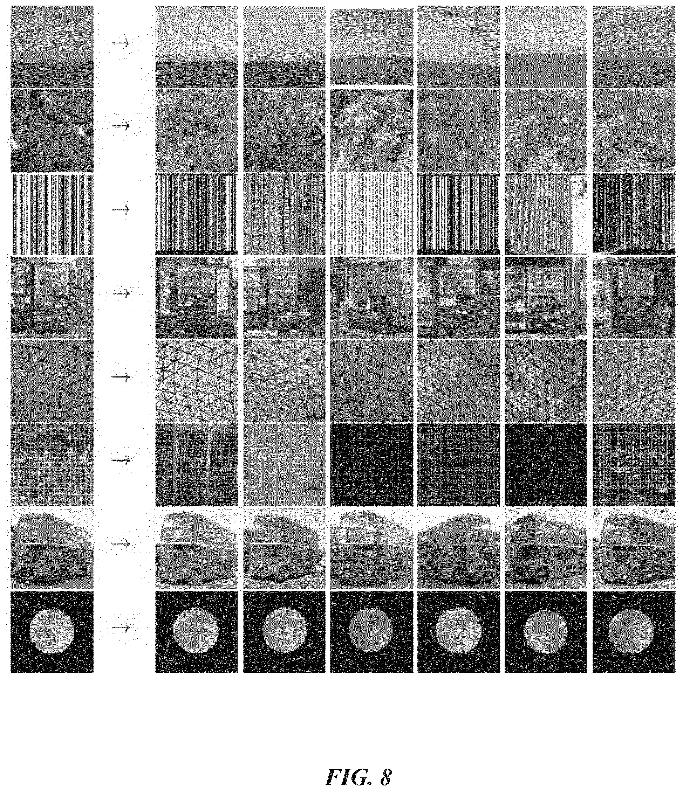

FIG. 8 illustrates examples of image modes and their neighbors in the graph, in particular embodiments. For each reference image (left), we show the corresponding image neighbors in the *k*-NN graph on its right. For visualization purposes, we seek the modes following a random walk technique: we first iteratively compute the stationary distribution of the walk, (i.e., the probability of each node to be visited during the random walk) and then consider as modes each local maximum of the stationary probability in the graph. We find on the order of 3,000 such maxima. FIG. 8 illustrates a sample of these maxima as well as their closest neighbors. We believe that these results are representative of the typical quality of the found neighbors, except that, for privacy reasons, we do not show the numerous modes corresponding to faces, of which we found many including specialized modes of "pairs of persons", "clusters of more than two persons" or "baby faces."

In particular embodiments, the social-networking system 160 may learn a quantization operator $c(\vec{x})$, where $\vec{x}$ is an $n$-dimensional vector, $c(\vec{x})$ is a quantization index, and each quantization index $k$ is associated with an $n$-dimensional quantization centroid $m_k$. In particular embodiments, the social-networking system 160 may learn the operator $c$ by learning a set of quantization centroids with a clustering algorithm (e.g., $k$-means clustering) and assign the indices of the quantization centroids such that a first distance (e.g., a Hamming distance) between the quantization indices approximates an second distances (e.g., an inter-centroid distance) between the corresponding centroids. In particular embodiments, the quantization may comprise product quantization (PQ). As an example and not by way of limitation, the social-networking system 160 may compute $c(\vec{x})$ by determining a plurality of subvectors $\vec{x}_n$ of $\vec{x}$ and quantize each subvector with a plurality of subquantizers $c_n$. Each subquantizer may independently quantize a respective subvector. Each subquantizer may have been trained independently. In particular embodiments, the social-networking system 160 may quantize each vector $\vec{d_i}$ corresponding to respective objects $d_i$ by computing $c(\vec{d_i})$. In particular embodiments, the social-networking system 160 may quantize a vector $\vec{q}$ representing a query $q$ by computing $c(\vec{q})$. In particular embodiments, the social-networking system 160 may, for each object $d_i$, compute a first distance between $c(\vec{q})$ and $c(\vec{d_i})$. As an example and not by way of limitation, the social-networking system 160 may, for each object $d_i$, compute a Hamming distance between $c(\vec{q})$ and $c(\vec{d_i})$. In particular embodiments, the social-networking system 160 may determine, for one or more objects $d_i$, that a condition has been met based on the first distances between the one or more quantized objects and the quantized vector. Based on determining that the condition has been met, the social-networking system 160 may compute a second distance between the vectors corresponding to the one or more objects and the vector representing the query based on the respective corresponding quantization centroids. As an example and not by way of limitation, the social-networking system 160 may compute an inter-centroid distance between the vectors corresponding to the one or more objects and the vector representing the query based on the respective corresponding quantization centroids. Although this disclosure describes particular vectors, quantizers, and distances, this disclosure contemplates any suitable vector, quantizer, or distance.

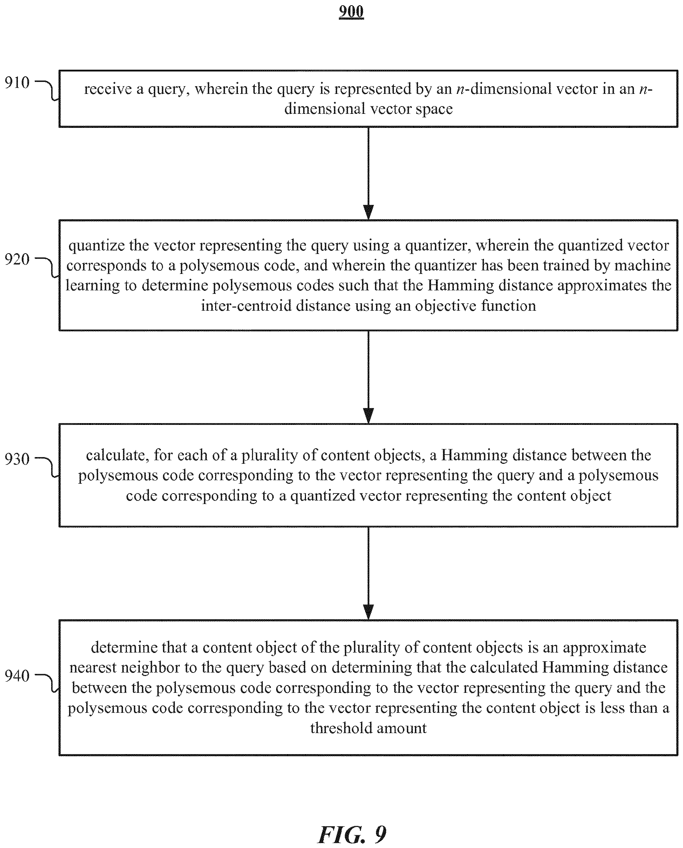

**FIG. 9** illustrates an example method 900 for performing a similarity search using polysemous codes. The method may begin at step 910, where the social-networking system 160 may receive a query, wherein the query is represented by an n-dimensional vector in an $n$-dimensional vector space. At step 920, the social-networking system 160 may quantize the vector representing the query using a quantizer, wherein the quantized vector corresponds to a polysemous code, and wherein the quantizer has been trained by machine learning to determine polysemous codes such that the Hamming distance approximates the inter-centroid distance using an objective function. At step 930, the social-networking system 160 may calculate, for each of a plurality of content objects, a Hamming distance between the polysemous code corresponding to the vector representing the query and a polysemous code corresponding to a quantized vector representing the content object. At step 940, the social-networking system 160 may determine that a content object of the plurality of content objects is an approximate nearest neighbor to the query based on determining that the calculated Hamming distance between the polysemous code corresponding to the vector representing the query and the polysemous code corresponding to the vector representing the content object is less than a threshold amount. Particular embodiments may repeat one or more steps of the method of FIG. 9, where appropriate. Although this disclosure describes and illustrates particular steps of the method of FIG. 9 as occurring in a particular order, this disclosure contemplates any suitable steps of the method of FIG. 9 occurring in any suitable order. Moreover, although this disclosure describes and illustrates an example method for performing a similarity search using polysemous codes including the particular steps of the method of FIG. 9, this disclosure contemplates any suitable method for performing a similarity search using polysemous codes including any suitable steps, which may include all, some, or none of the steps of the method of FIG. 9, where appropriate. Furthermore, although this disclosure describes and illustrates particular components, devices, or systems carrying out particular steps of the method of FIG. 9, this disclosure contemplates any suitable combination of any suitable components, devices, or systems carrying out any suitable steps of the method of FIG. 9.

Social Graph Affinity and Coefficient

In particular embodiments, the social-networking system 160 may determine the social-graph affinity (which may be referred to herein as "affinity") of various social-graph entities for each other. Affinity may represent the strength of a relationship or level of interest between particular objects associated with the online social network, such as users, concepts, content, actions, advertisements, other objects associated with the online social network, or any suitable combination thereof. Affinity may also be determined with respect to objects associated with third-party systems 170 or other suitable systems. An overall affinity for a social-graph entity for each user, subject matter, or type of content may be established. The overall affinity may change based on continued monitoring of the actions or relationships associated with the social-graph entity. Although this disclosure describes determining particular affinities in a particular manner, this disclosure contemplates determining any suitable affinities in any suitable manner.

In particular embodiments, the social-networking system 160 may measure or quantify social-graph affinity using an affinity coefficient (which may be referred to herein as "coefficient"). The coefficient may represent or quantify the strength of a relationship between particular objects associated with the online social network. The coefficient may also represent a probability or function that measures a predicted probability that a user will perform a particular action based on the user's interest in the action. In this way, a user's future actions may be predicted based on the user's prior actions, where the coefficient may be calculated at least in part on the history of the user's actions. Coefficients may be used to predict any number of actions, which may be within or outside of the online social network. As an example and not by way of limitation, these actions may include various types of communications, such as sending messages, posting content, or commenting on content; various types of observation actions, such as accessing or viewing profile interfaces, media, or other suitable content; various types of coincidence information about two or more social-graph entities, such as being in the same group, tagged in the same photograph, checked-in at the same location, or attending the same event; or other suitable actions. Although this disclosure describes measuring affinity in a particular manner, this disclosure contemplates measuring affinity in any suitable manner.

In particular embodiments, the social-networking system 160 may use a variety of factors to calculate a coefficient. These factors may include, for example, user actions, types of relationships between objects, location information, other suitable factors, or any combination thereof. In particular embodiments, different factors may be weighted differently when calculating the coefficient. The weights for each factor may be static or the weights may change according to, for example, the user, the type of relationship, the type of action, the user's location, and so forth. Ratings for the factors may be combined according to their weights to determine an overall coefficient for the user. As an example and not by way of limitation, particular user actions may be assigned both a rating and a weight while a relationship associated with the particular user action is assigned a rating and a correlating weight (e.g., so the weights total 100%). To calculate the coefficient of a user towards a particular object, the rating assigned to the user's actions may comprise, for example, 60% of the overall coefficient, while the relationship between the user and the object may comprise 40% of the overall coefficient. In particular embodiments, the social-networking system 160 may consider a variety of variables when determining weights for various factors used to calculate a coefficient, such as, for example, the time since information was accessed, decay factors, frequency of access, relationship to information or relationship to the object about which information was accessed, relationship to social-graph entities connected to the object, short- or long-term averages of user actions, user feedback, other suitable variables, or any combination thereof. As an example and not by way of limitation, a coefficient may include a decay factor that causes the strength of the signal provided by particular actions to decay with time, such that more recent actions are more relevant when calculating the coefficient. The ratings and weights may be continuously updated based on continued tracking of the actions upon which the coefficient is based. Any type of process or algorithm may be employed for assigning, combining, averaging, and so forth the ratings for each factor and the weights assigned to the factors. In particular embodiments, the social-networking system 160 may determine coefficients using machine-learning algorithms trained on historical actions and past user responses, or data farmed from users by exposing them to various options and measuring responses. Although this disclosure describes calculating coefficients in a particular manner, this disclosure contemplates calculating coefficients in any suitable manner.

In particular embodiments, the social-networking system 160 may calculate a coefficient based on a user's actions. The social-networking system 160 may monitor such actions on the online social network, on a third-party system 170, on other suitable systems, or any combination thereof. Any suitable type of user actions may be tracked or monitored. Typical user actions include viewing profile interfaces, creating or posting content, interacting with content, tagging or being tagged in images, joining groups, listing and confirming attendance at events, checking-in at locations, liking particular interfaces, creating interfaces, and performing other tasks that facilitate social action. In particular embodiments, the social-networking system 160 may calculate a coefficient based on the user's actions with particular types of content. The content may be associated with the online social network, a third-party system 170, or another suitable system. The content may include users, profile interfaces, posts, news stories, headlines, instant messages, chat room conversations, emails, advertisements, pictures, video, music, other suitable objects, or any combination thereof. The social-networking system 160 may analyze a user's actions to determine whether one or more of the actions indicate an affinity for subject matter, content, other users, and so forth. As an example and not by way of limitation, if a user frequently posts content related to "coffee" or variants thereof, the social-networking system 160 may determine the user has a high coefficient with respect to the concept "coffee". Particular actions or types of actions may be assigned a higher weight and/or rating than other actions, which may affect the overall calculated coefficient. As an example and not by way of limitation, if a first user emails a second user, the weight or the rating for the action may be higher than if the first user simply views the user-profile interface for the second user.

In particular embodiments, the social-networking system 160 may calculate a coefficient based on the type of relationship between particular objects. Referencing the social graph 200, the social-networking system 160 may analyze the number and/or type of edges 206 connecting particular user nodes 202 and concept nodes 204 when calculating a coefficient. As an example and not by way of limitation, user nodes 202 that are connected by a spouse-type edge (representing that the two users are married) may be assigned a higher coefficient than a user nodes 202 that are connected by a friend-type edge. In other words, depending upon the weights assigned to the actions and relationships for the particular user, the overall affinity may be determined to be higher for content about the user's spouse than for content about the user's friend. In particular embodiments, the relationships a user has with another object may affect the weights and/or the ratings of the user's actions with respect to calculating the coefficient for that object. As an example and not by way of limitation, if a user is tagged in a first photo, but merely likes a second photo, the social-networking system 160 may determine that the user has a higher coefficient with respect to the first photo than the second photo because having a tagged-in-type relationship with content may be assigned a higher weight and/or rating than having a like-type relationship with content. In particular embodiments, the social-networking system 160 may calculate a coefficient for a first user based on the relationship one or more second users have with a particular object. In other words, the connections and coefficients other users have with an object may affect the first user's coefficient for the object. As an example and not by way of limitation, if a first user is connected to or has a high coefficient for one or more second users, and those second users are connected to or have a high coefficient for a particular object, the social-networking system 160 may determine that the first user should also have a relatively high coefficient for the particular object. In particular embodiments, the coefficient may be based on the degree of separation between particular objects. The lower coefficient may represent the decreasing likelihood that the first user will share an interest in content objects of the user that is indirectly connected to the first user in the social graph 200. As an example and not by way of limitation, social-graph entities that are closer in the social graph 200 (i.e., fewer degrees of separation) may have a higher coefficient than entities that are further apart in the social graph 200.

In particular embodiments, the social-networking system 160 may calculate a coefficient based on location information. Objects that are geographically closer to each other may be considered to be more related or of more interest to each other than more distant objects. In particular embodiments, the coefficient of a user towards a particular object may be based on the proximity of the object's location to a current location associated with the user (or the location of a client system 130 of the user). A first user may be more interested in other users or concepts that are closer to the first user. As an example and not by way of limitation, if a user is one mile from an airport and two miles from a gas station, the social-networking system 160 may determine that the user has a higher coefficient for the airport than the gas station based on the proximity of the airport to the user.

In particular embodiments, the social-networking system 160 may perform particular actions with respect to a user based on coefficient information. Coefficients may be used to predict whether a user will perform a particular action based on the user's interest in the action. A coefficient may be used when generating or presenting any type of objects to a user, such as advertisements, search results, news stories, media, messages, notifications, or other suitable objects. The coefficient may also be utilized to rank and order such objects, as appropriate. In this way, the social-networking system 160 may provide information that is relevant to user's interests and current circumstances, increasing the likelihood that they will find such information of interest. In particular embodiments, the social-networking system 160 may generate content based on coefficient information. Content objects may be provided or selected based on coefficients specific to a user. As an example and not by way of limitation, the coefficient may be used to generate media for the user, where the user may be presented with media for which the user has a high overall coefficient with respect to the media object. As another example and not by way of limitation, the coefficient may be used to generate advertisements for the user, where the user may be presented with advertisements for which the user has a high overall coefficient with respect to the advertised object. In particular embodiments, the social-networking system 160 may generate search results based on coefficient information. Search results for a particular user may be scored or ranked based on the coefficient associated with the search results with respect to the querying user. As an example and not by way of limitation, search results corresponding to objects with higher coefficients may be ranked higher on a search-results interface than results corresponding to objects having lower coefficients.

In particular embodiments, the social-networking system 160 may calculate a coefficient in response to a request for a coefficient from a particular system or process. To predict the likely actions a user may take (or may be the subject of) in a given situation, any process may request a calculated coefficient for a user. The request may also include a set of weights to use for various factors used to calculate the coefficient. This request may come from a process running on the online social network, from a third-party system 170 (e.g., via an API or other communication channel), or from another suitable system. In response to the request, the social-networking system 160 may calculate the coefficient (or access the coefficient information if it has previously been calculated and stored). In particular embodiments, the social-networking system 160 may measure an affinity with respect to a particular process. Different processes (both internal and external to the online social network) may request a coefficient for a particular object or set of objects. The social-networking system 160 may provide a measure of affinity that is relevant to the particular process that requested the measure of affinity. In this way, each process receives a measure of affinity that is tailored for the different context in which the process will use the measure of affinity.

In connection with social-graph affinity and affinity coefficients, particular embodiments may utilize one or more systems, components, elements, functions, methods, operations, or steps disclosed in U.S. Patent Application No. 11/503093, filed 11 August 2006, U.S. Patent Application No. 12/977027, filed 22 December 2010, U.S. Patent Application No. 12/978265, filed 23 December 2010, and U.S. Patent Application No. 13/632869, filed 01 October 2012, each of which is incorporated by reference.

Advertising

In particular embodiments, an advertisement may be text (which may be HTML-linked), one or more images (which may be HTML-linked), one or more videos, audio, one or more ADOBE FLASH files, a suitable combination of these, or any other suitable advertisement in any suitable digital format presented on one or more web interfaces, in one or more e-mails, or in connection with search results requested by a user. In addition or as an alternative, an advertisement may be one or more sponsored stories (e.g., a news-feed or ticker item on the social-networking system 160). A sponsored story may be a social action by a user (such as "liking" an interface, "liking" or commenting on a post on an interface, RSVPing to an event associated with an interface, voting on a question posted on an interface, checking in to a place, using an application or playing a game, or "liking" or sharing a website) that an advertiser promotes, for example, by having the social action presented within a pre-determined area of a profile interface of a user or other interface, presented with additional information associated with the advertiser, bumped up or otherwise highlighted within news feeds or tickers of other users, or otherwise promoted. The advertiser may pay to have the social action promoted. As an example and not by way of limitation, advertisements may be included among the search results of a search-results interface, where sponsored content is promoted over non-sponsored content.

In particular embodiments, an advertisement may be requested for display within social-networking-system web interfaces, third-party web interfaces, or other interfaces. An advertisement may be displayed in a dedicated portion of an interface, such as in a banner area at the top of the interface, in a column at the side of the interface, in a GUI within the interface, in a pop-up window, in a drop-down menu, in an input field of the interface, over the top of content of the interface, or elsewhere with respect to the interface. In addition or as an alternative, an advertisement may be displayed within an application. An advertisement may be displayed within dedicated interfaces, requiring the user to interact with or watch the advertisement before the user may access an interface or utilize an application. The user may, for example view the advertisement through a web browser.

A user may interact with an advertisement in any suitable manner. The user may click or otherwise select the advertisement. By selecting the advertisement, the user may be directed to (or a browser or other application being used by the user) an interface associated with the advertisement. At the interface associated with the advertisement, the user may take additional actions, such as purchasing a product or service associated with the advertisement, receiving information associated with the advertisement, or subscribing to a newsletter associated with the advertisement. An advertisement with audio or video may be played by selecting a component of the advertisement (like a "play button"). Alternatively, by selecting the advertisement, the social-networking system 160 may execute or modify a particular action of the user.

An advertisement may also include social-networking-system functionality that a user may interact with. As an example and not by way of limitation, an advertisement may enable a user to "like" or otherwise endorse the advertisement by selecting an icon or link associated with endorsement. As another example and not by way of limitation, an advertisement may enable a user to search (e.g., by executing a query) for content related to the advertiser. Similarly, a user may share the advertisement with another user (e.g., through the social-networking system 160) or RSVP (e.g., through the social-networking system 160) to an event associated with the advertisement. In addition or as an alternative, an advertisement may include social-networking-system content directed to the user. As an example and not by way of limitation, an advertisement may display information about a friend of the user within the social-networking system 160 who has taken an action associated with the subject matter of the advertisement.

Privacy

In particular embodiments, one or more of the content objects of the online social network may be associated with a privacy setting. The privacy settings (or "access settings") for an object may be stored in any suitable manner, such as, for example, in association with the object, in an index on an authorization server, in another suitable manner, or any combination thereof. A privacy setting of an object may specify how the object (or particular information associated with an object) can be accessed (e.g., viewed or shared) using the online social network. Where the privacy settings for an object allow a particular user to access that object, the object may be described as being "visible" with respect to that user. As an example and not by way of limitation, a user of the online social network may specify privacy settings for a user-profile interface that identify a set of users that may access the work experience information on the user-profile interface, thus excluding other users from accessing the information. In particular embodiments, the privacy settings may specify a "blocked list" of users that should not be allowed to access certain information associated with the object. In other words, the blocked list may specify one or more users or entities for which an object is not visible. As an example and not by way of limitation, a user may specify a set of users that may not access photos albums associated with the user, thus excluding those users from accessing the photo albums (while also possibly allowing certain users not within the set of users to access the photo albums). In particular embodiments, privacy settings may be associated with particular social-graph elements. Privacy settings of a social-graph element, such as a node or an edge, may specify how the social-graph element, information associated with the social-graph element, or content objects associated with the social-graph element can be accessed using the online social network. As an example and not by way of limitation, a particular concept node 204 corresponding to a particular photo may have a privacy setting specifying that the photo may only be accessed by users tagged in the photo and their friends. In particular embodiments, privacy settings may allow users to opt in or opt out of having their actions logged by the social-networking system 160 or shared with other systems (e.g., a third-party system 170). In particular embodiments, the privacy settings associated with an object may specify any suitable granularity of permitted access or denial of access. As an example and not by way of limitation, access or denial of access may be specified for particular users (e.g., only me, my roommates, and my boss), users within a particular degrees-of-separation (e.g., friends, or friends-of-friends), user groups (e.g., the gaming club, my family), user networks (e.g., employees of particular employers, students or alumni of particular university), all users ("public"), no users ("private"), users of third-party systems 170, particular applications (e.g., third-party applications, external websites), other suitable users or entities, or any combination thereof. Although this disclosure describes using particular privacy settings in a particular manner, this disclosure contemplates using any suitable privacy settings in any suitable manner.

In particular embodiments, one or more servers 162 may be authorization/privacy servers for enforcing privacy settings. In response to a request from a user (or other entity) for a particular object stored in a data store 164, the social-networking system 160 may send a request to the data store 164 for the object. The request may identify the user associated with the request and may only be sent to the user (or a client system 130 of the user) if the authorization server determines that the user is authorized to access the object based on the privacy settings associated with the object. If the requesting user is not authorized to access the object, the authorization server may prevent the requested object from being retrieved from the data store 164, or may prevent the requested object from being sent to the user. In the search query context, an object may only be generated as a search result if the querying user is authorized to access the object. In other words, the object must have a visibility that is visible to the querying user. If the object has a visibility that is not visible to the user, the object may be excluded from the search results. Although this disclosure describes enforcing privacy settings in a particular manner, this disclosure contemplates enforcing privacy settings in any suitable manner.

Systems and Methods

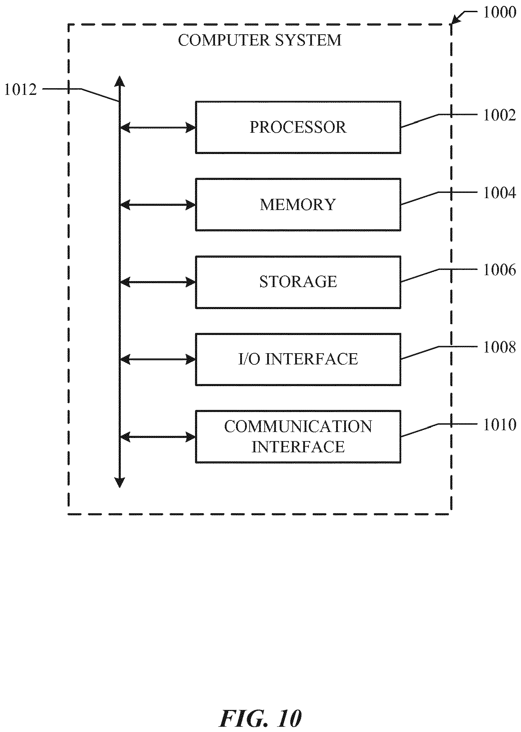

FIG. 10 illustrates an example computer system 1000. In particular embodiments, one or more computer systems 1000 perform one or more steps of one or more methods described or illustrated herein. In particular embodiments, one or more computer systems 1000 provide functionality described or illustrated herein. In particular embodiments, software running on one or more computer systems 1000 performs one or more steps of one or more methods described or illustrated herein or provides functionality described or illustrated herein. Particular embodiments include one or more portions of one or more computer systems 1000. Herein, reference to a computer system may encompass a computing device, and vice versa, where appropriate. Moreover, reference to a computer system may encompass one or more computer systems, where appropriate.

This disclosure contemplates any suitable number of computer systems 1000. This disclosure contemplates computer system 1000 taking any suitable physical form. As example and not by way of limitation, computer system 1000 may be an embedded computer system, a system-on-chip (SOC), a single-board computer system (SBC) (such as, for example, a computer-on-module (COM) or system-on-module (SOM)), a desktop computer system, a laptop or notebook computer system, an interactive kiosk, a mainframe, a mesh of computer systems, a mobile telephone, a personal digital assistant (PDA), a server, a tablet computer system, or a combination of two or more of these. Where appropriate, computer system 1000 may include one or more computer systems 1000; be unitary or distributed; span multiple locations; span multiple machines; span multiple data centers; or reside in a cloud, which may include one or more cloud components in one or more networks. Where appropriate, one or more computer systems 1000 may perform without substantial spatial or temporal limitation one or more steps of one or more methods described or illustrated herein. As an example and not by way of limitation, one or more computer systems 1000 may perform in real time or in batch mode one or more steps of one or more methods described or illustrated herein. One or more computer systems 1000 may perform at different times or at different locations one or more steps of one or more methods described or illustrated herein, where appropriate.

In particular embodiments, computer system 1000 includes a processor 1002, memory 1004, storage 1006, an input/output (I/O) interface 1008, a communication interface 1010, and a bus 1012. Although this disclosure describes and illustrates a particular computer system having a particular number of particular components in a particular arrangement, this disclosure contemplates any suitable computer system having any suitable number of any suitable components in any suitable arrangement.

In particular embodiments, processor 1002 includes hardware for executing instructions, such as those making up a computer program. As an example and not by way of limitation, to execute instructions, processor 1002 may retrieve (or fetch) the instructions from an internal register, an internal cache, memory 1004, or storage 1006; decode and execute them; and then write one or more results to an internal register, an internal cache, memory 1004, or storage 1006. In particular embodiments, processor 1002 may include one or more internal caches for data, instructions, or addresses. This disclosure contemplates processor 1002 including any suitable number of any suitable internal caches, where appropriate. As an example and not by way of limitation, processor 1002 may include one or more instruction caches, one or more data caches, and one or more translation lookaside buffers (TLBs). Instructions in the instruction caches may be copies of instructions in memory 1004 or storage 1006, and the instruction caches may speed up retrieval of those instructions by processor 1002. Data in the data caches may be copies of data in memory 1004 or storage 1006 for instructions executing at processor 1002 to operate on; the results of previous instructions executed at processor 1002 for access by subsequent instructions executing at processor 1002 or for writing to memory 1004 or storage 1006; or other suitable data. The data caches may speed up read or write operations by processor 1002. The TLBs may speed up virtual-address translation for processor 1002. In particular embodiments, processor 1002 may include one or more internal registers for data, instructions, or addresses. This disclosure contemplates processor 1002 including any suitable number of any suitable internal registers, where appropriate. Where appropriate, processor 1002 may include one or more arithmetic logic units (ALUs); be a multi-core processor; or include one or more processors 1002. Although this disclosure describes and illustrates a particular processor, this disclosure contemplates any suitable processor.

In particular embodiments, memory 1004 includes main memory for storing instructions for processor 1002 to execute or data for processor 1002 to operate on. As an example and not by way of limitation, computer system 1000 may load instructions from storage 1006 or another source (such as, for example, another computer system 1000) to memory 1004. Processor 1002 may then load the instructions from memory 1004 to an internal register or internal cache. To execute the instructions, processor 1002 may retrieve the instructions from the internal register or internal cache and decode them. During or after execution of the instructions, processor 1002 may write one or more results (which may be intermediate or final results) to the internal register or internal cache. Processor 1002 may then write one or more of those results to memory 1004. In particular embodiments, processor 1002 executes only instructions in one or more internal registers or internal caches or in memory 1004 (as opposed to storage 1006 or elsewhere) and operates only on data in one or more internal registers or internal caches or in memory 1004 (as opposed to storage 1006 or elsewhere). One or more memory buses (which may each include an address bus and a data bus) may couple processor 1002 to memory 1004. Bus 1012 may include one or more memory buses, as described below. In particular embodiments, one or more memory management units (MMUs) reside between processor 1002 and memory 1004 and facilitate accesses to memory 1004 requested by processor 1002. In particular embodiments, memory 1004 includes random access memory (RAM). This RAM may be volatile memory, where appropriate Where appropriate, this RAM may be dynamic RAM (DRAM) or static RAM (SRAM). Moreover, where appropriate, this RAM may be single-ported or multi-ported RAM. This disclosure contemplates any suitable RAM. Memory 1004 may include one or more memories 1004, where appropriate. Although this disclosure describes and illustrates particular memory, this disclosure contemplates any suitable memory.

In particular embodiments, storage 1006 includes mass storage for data or instructions. As an example and not by way of limitation, storage 1006 may include a hard disk drive (HDD), a floppy disk drive, flash memory, an optical disc, a magneto-optical disc, magnetic tape, or a Universal Serial Bus (USB) drive or a combination of two or more of these. Storage 1006 may include removable or non-removable (or fixed) media, where appropriate. Storage 1006 may be internal or external to computer system 1000, where appropriate. In particular embodiments, storage 1006 is non-volatile, solid-state memory. In particular embodiments, storage 1006 includes read-only memory (ROM). Where appropriate, this ROM may be mask-programmed ROM, programmable ROM (PROM), erasable PROM (EPROM), electrically erasable PROM (EEPROM), electrically alterable ROM (EAROM), or flash memory or a combination of two or more of these. This disclosure contemplates mass storage 1006 taking any suitable physical form. Storage 1006 may include one or more storage control units facilitating communication between processor 1002 and storage 1006, where appropriate. Where appropriate, storage 1006 may include one or more storages 1006. Although this disclosure describes and illustrates particular storage, this disclosure contemplates any suitable storage.

In particular embodiments, I/O interface 1008 includes hardware, software, or both, providing one or more interfaces for communication between computer system 1000 and one or more I/O devices. Computer system 1000 may include one or more of these I/O devices, where appropriate. One or more of these I/O devices may enable communication between a person and computer system 1000. As an example and not by way of limitation, an I/O device may include a keyboard, keypad, microphone, monitor, mouse, printer, scanner, speaker, still camera, stylus, tablet, touch screen, trackball, video camera, another suitable I/O device or a combination of two or more of these. An I/O device may include one or more sensors. This disclosure contemplates any suitable I/O devices and any suitable I/O interfaces 1008 for them. Where appropriate, I/O interface 1008 may include one or more device or software drivers enabling processor 1002 to drive one or more of these I/O devices. I/O interface 1008 may include one or more I/O interfaces 1008, where appropriate. Although this disclosure describes and illustrates a particular I/O interface, this disclosure contemplates any suitable I/O interface.

In particular embodiments, communication interface 1010 includes hardware, software, or both providing one or more interfaces for communication (such as, for example, packet-based communication) between computer system 1000 and one or more other computer systems 1000 or one or more networks. As an example and not by way of limitation, communication interface 1010 may include a network interface controller (NIC) or network adapter for communicating with an Ethernet or other wire-based network or a wireless NIC (WNIC) or wireless adapter for communicating with a wireless network, such as a WI-FI network. This disclosure contemplates any suitable network and any suitable communication interface 1010 for it. As an example and not by way of limitation, computer system 1000 may communicate with an ad hoc network, a personal area network (PAN), a local area network (LAN), a wide area network (WAN), a metropolitan area network (MAN), or one or more portions of the Internet or a combination of two or more of these. One or more portions of one or more of these networks may be wired or wireless. As an example, computer system 1000 may communicate with a wireless PAN (WPAN) (such as, for example, a BLUETOOTH WPAN), a WI-FI network, a WI-MAX network, a cellular telephone network (such as, for example, a Global System for Mobile Communications (GSM) network), or other suitable wireless network or a combination of two or more of these. Computer system 1000 may include any suitable communication interface 1010 for any of these networks, where appropriate. Communication interface 1010 may include one or more communication interfaces 1010, where appropriate. Although this disclosure describes and illustrates a particular communication interface, this disclosure contemplates any suitable communication interface.

In particular embodiments, bus 1012 includes hardware, software, or both coupling components of computer system 1000 to each other. As an example and not by way of limitation, bus 1012 may include an Accelerated Graphics Port (AGP) or other graphics bus, an Enhanced Industry Standard Architecture (EISA) bus, a frontside bus (FSB), a HYPERTRANSPORT (HT) interconnect, an Industry Standard Architecture (ISA) bus, an INFINIBAND interconnect, a low-pin-count (LPC) bus, a memory bus, a Micro Channel Architecture (MCA) bus, a Peripheral Component Interconnect (PCI) bus, a PCI-Express (PCIe) bus, a serial advanced technology attachment (SATA) bus, a Video Electronics Standards Association local (VLB) bus, or another suitable bus or a combination of two or more of these. Bus 1012 may include one or more buses 1012, where appropriate. Although this disclosure describes and illustrates a particular bus, this disclosure contemplates any suitable bus or interconnect.

Herein, a computer-readable non-transitory storage medium or media may include one or more semiconductor-based or other integrated circuits (ICs) (such, as for example, field-programmable gate arrays (FPGAs) or application-specific ICs (ASICs)), hard disk drives (HDDs), hybrid hard drives (HHDs), optical discs, optical disc drives (ODDs), magneto-optical discs, magneto-optical drives, floppy diskettes, floppy disk drives (FDDs), magnetic tapes, solid-state drives (SSDs), RAM-drives, SECURE DIGITAL cards or drives, any other suitable computer-readable non-transitory storage media, or any suitable combination of two or more of these, where appropriate. A computer-readable non-transitory storage medium may be volatile, non-volatile, or a combination of volatile and non-volatile, where appropriate.

Miscellaneous

Herein, "or" is inclusive and not exclusive, unless expressly indicated otherwise or indicated otherwise by context. Therefore, herein, "A or B" means "A, B, or both," unless expressly indicated otherwise or indicated otherwise by context. Moreover, "and" is both joint and several, unless expressly indicated otherwise or indicated otherwise by context. Therefore, herein, "A and B" means "A and B, jointly or severally," unless expressly indicated otherwise or indicated otherwise by context.

The scope of this disclosure encompasses all changes, substitutions, variations, alterations, and modifications to the example embodiments described or illustrated herein that a person having ordinary skill in the art would comprehend. The scope of this disclosure is not limited to the example embodiments described or illustrated herein. Moreover, although this disclosure describes and illustrates respective embodiments herein as including particular components, elements, feature, functions, operations, or steps, any of these embodiments may include any combination or permutation of any of the components, elements, features, functions, operations, or steps described or illustrated anywhere herein that a person having ordinary skill in the art would comprehend. Furthermore, reference in the appended claims to an apparatus or system or a component of an apparatus or system being adapted to, arranged to, capable of, configured to, enabled to, operable to, or operative to perform a particular function encompasses that apparatus, system, component, whether or not it or that particular function is activated, turned on, or unlocked, as long as that apparatus, system, or component is so adapted, arranged, capable, configured, enabled, operable, or operative. Additionally, although this disclosure describes or illustrates particular embodiments as providing particular advantages, particular embodiments may provide none, some, or all of these advantages.

**Claims**

1. A method comprising, by a computing device:

   receiving a query, in particular a query for one or more similar images and/or videos in a database, wherein the query is represented by an n-dimensional vector in an n-dimensional vector space;
   quantizing the vector representing the query using a quantizer, wherein the quantized vector corresponds to a polysemous code, and wherein the quantizer has been trained by machine learning to determine polysemous codes such that the Hamming distance approximates the inter-centroid distance using an objective function;
   calculating, for each of a plurality of content objects, a Hamming distance between the polysemous code corresponding to the vector representing the query and a polysemous code corresponding to a quantized vector representing the content object; and
   determining that a content object of the plurality of content objects is an approximate nearest neighbor to the query based on determining that the calculated Hamming distance between the polysemous code corresponding to the vector representing the query and the polysemous code corresponding to the vector representing the content object is less than a threshold amount.

2. The method of Claim 1, further comprising dividing the vector representing the query into a plurality of subvectors representing the query, wherein:

   quantizing the vector representing the query comprises quantizing each of the plurality of subvectors representing the query using a plurality of subquantizers, each quantized subvector corresponding to a polysemous code;
   each subquantizer has been trained by machine learning to determine polysemous codes such that the Hamming distance approximates the inter-centroid distance using an objective function; and
   the Hamming distance between the polysemous code corresponding to the vector representing the query and the polysemous code corresponding to the quantized vector representing the content object is calculated based on a plurality of Hamming distances between each polysemous code corresponding to each respective subvector representing the query and each of a plurality of respective polysemous codes corresponding to respective quantized subvectors representing the content object;
   optionally wherein each of the subquantizers is distinct from each other subquantizer of the plurality of subquantizers; and/or
   optionally wherein each of the plurality of quantized subvectors representing the content object are quantized using the corresponding subquantizer.

3. The method of Claim 1 or 2, wherein a Hamming distance between a first polysemous code and a second polysemous is calculated as the number of bits which differ between the first polysemous code and the second polysemous code; and/or
   wherein a Hamming distance between a first polysemous code and a second polysemous code is calculated based on a pre-generated lookup table.

4. The method of any of Claims 1 to 3, wherein the quantizer uses *k*-means clustering.

5. The method of any of Claims 1 to 4, where in the objective function is

$$\operatorname*{argmax}_{\pi} \sum_{i \in \mathcal{J}, j \in \mathcal{J}} \left[ h\big(\pi(i), \pi(j)\big) - f\Big(d\big(c_i, c_j\big)\Big) \right]^2,$$ wherein:

$\mathcal{J}$ is a set of centroid indexes;

$c_i$ is a reproduction value associated with centroid $i$;

the function $\pi$ maps each centroid index to a different vertex of a unit hyper-cube;

$h(\pi(i), \pi(j))$ is a Hamming distance between $\pi(i)$ and $\pi(j)$;

$d(c_i, c_j)$ is the distance between $c_i$ and $c_j$; and

the function $f$ is a monotonously increasing function that maps $d(c_i, c_j)$ into a range of comparable Hamming distances;

optionally wherein the function $f$ is $f(x) = \frac{\sqrt{d}}{2\sigma}(x - \mu) + \frac{d}{2}$, wherein:

$\mu$ is an empirically measured mean of $d$; and

$\sigma$ is an empirically measured standard deviation of $d$.

6. The method of any of Claims 1 to 5, wherein the objective function is

$$\underset{\pi}{\arg\max} \sum_{i \in \mathcal{J}, j \in \mathcal{J}} w\left(f\left(d(c_i, c_j)\right)\right)\left[h(\pi(i), \pi(j)) - f\left(d(c_i, c_j)\right)\right]^2,$$ wherein:

is a set of centroid indexes;

$c_i$ is a reproduction value associated with centroid $i$;

the function $\pi$ maps each centroid index to a different vertex of a unit hyper-cube;

$h(\pi(i), \pi(j))$ is a Hamming distance between $\pi(i)$ and $\pi(j)$;

$d(c_i, c_j)$ is the distance between $c_i$ and $c_j$;

the function $f$ is a monotonously increasing function that maps $d(c_i, c_j)$ into a range of comparable Hamming distances;

the function $w$ is the function $w(u) = \alpha^u$ with $\alpha < 1$.

7. The method of any of Claims 1 to 6, further comprising sending one or more content objects determined to be approximate nearest neighbors to the query to the first user in response to the query.

8. The method of any of Claims 1 to 7, wherein each of the content objects comprises an image.

9. The method of any of Claims 1 to 8, wherein the received query comprises a query image, the method further comprising:

generating the $n$-dimensional vector representing the query image;

optionally wherein the query corresponds to a request for images similar to the query image.

10. The method of any of Claims 1 to 9, wherein each of the content objects comprises a video.

11. The method of any of Claims 1 to 10, wherein the received query comprises a query video, the method further comprising:

generating the n-dimensional vector representing the query video.

12. The method of any of Claims 1 to 11, further comprising accessing a social graph comprising a plurality of nodes and a plurality of edges connecting the nodes, each of the edges between two of the nodes representing a single degree of separation between them, the nodes comprising:

a first node corresponding to the first user; and

a plurality of second nodes corresponding to the plurality of content objects, respectively.

13. One or more computer-readable non-transitory storage media embodying software that is operable when executed to:

receive a query, wherein the query is represented by an n-dimensional vector in an n-dimensional vector space;

quantize the vector representing the query using a quantizer, wherein the quantized vector corresponds to a polysemous code, and wherein the quantizer has been trained by machine learning to determine polysemous codes such that the Hamming distance approximates the inter-centroid distance using an objective function;
calculate, for each of a plurality of content objects, a Hamming distance between the polysemous code corresponding to the vector representing the query and a polysemous code corresponding to a quantized vector representing the content object; and

determine that a content object of the plurality of content objects is an approximate nearest neighbor to the query based on determining that the calculated Hamming distance between the polysemous code corresponding to the vector representing the query and the polysemous code corresponding to the vector representing the content object is less than a threshold amount.

14. The media of Claim 13, wherein the software is further operable when executed to divide the vector representing the query into a plurality of subvectors representing the query, wherein:

quantizing the vector representing the query comprises quantizing each of the plurality of subvectors representing the query using a plurality of subquantizers, each quantized subvector corresponding to a polysemous code;
each subquantizer has been trained by machine learning to determine polysemous codes such that the Hamming distance approximates the inter-centroid distance using an objective function; and
the Hamming distance between the polysemous code corresponding to the vector representing the query and the polysemous code corresponding to the quantized vector representing the content object is calculated based on a plurality of Hamming distances between each polysemous code corresponding to each respective subvector representing the query and each of a plurality of respective polysemous codes corresponding to respective quantized subvectors representing the content object.

15. A system comprising: one or more processors; and a non-transitory memory coupled to the processors comprising instructions executable by the processors, the processors operable when executing the instructions to:

receive a query, wherein the query is represented by an n-dimensional vector in an n-dimensional vector space;
quantize the vector representing the query using a quantizer, wherein the quantized vector corresponds to a polysemous code, and wherein the quantizer has been trained by machine learning to determine polysemous codes such that the Hamming distance approximates the inter-centroid distance using an objective function;
calculate, for each of a plurality of content objects, a Hamming distance between the polysemous code corresponding to the vector representing the query and a polysemous code corresponding to a quantized vector representing the content object; and
determine that a content object of the plurality of content objects is an approximate nearest neighbor to the query based on determining that the calculated Hamming distance between the polysemous code corresponding to the vector representing the query and the polysemous code corresponding to the vector representing the content object is less than a threshold amount.

<u>**100**</u>

SOCIAL-NETWORKING SYSTEM

160

162
SERVER

164
DATA STORE

150

CLIENT SYSTEM

WEB BROWSER
<u>132</u>

130

150

NETWORK
<u>110</u>

150

170

THIRD-PARTY
SYSTEM

*FIG. 1*

**FIG. 2**

Regular PQ Codes

Polysemous PQ Codes

*FIG. 3*

*FIG. 4*

EP 3 293 696 A1

FIG. 5

*FIG. 6*

*FIG. 7*

*FIG. 8*

<u>900</u>

910 — receive a query, wherein the query is represented by an *n*-dimensional vector in an *n*-dimensional vector space

920 — quantize the vector representing the query using a quantizer, wherein the quantized vector corresponds to a polysemous code, and wherein the quantizer has been trained by machine learning to determine polysemous codes such that the Hamming distance approximates the inter-centroid distance using an objective function

930 — calculate, for each of a plurality of content objects, a Hamming distance between the polysemous code corresponding to the vector representing the query and a polysemous code corresponding to a quantized vector representing the content object

940 — determine that a content object of the plurality of content objects is an approximate nearest neighbor to the query based on determining that the calculated Hamming distance between the polysemous code corresponding to the vector representing the query and the polysemous code corresponding to the vector representing the content object is less than a threshold amount

*FIG. 9*

*FIG. 10*

| | | Europäisches Patentamt<br>European Patent Office<br>Office européen des brevets | **EUROPEAN SEARCH REPORT** | **Application Number**<br>EP 17 18 9931 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P | Matthijs Douze ET AL: "Polysemous Code", Conference paper first online on September 2016 for the 14th European Conference, Amsterdam, The Netherlands, October 11-14, 2016, Proceedings, Part II Computer Vision - ECCV 2016, 17 September 2016 (2016-09-17), XP055418244, Cham ISBN: 978-3-319-46475-6 Retrieved from the Internet: URL:https://rd.springer.com/content/pdf/10.1007/978-3-319-46475-6_48.pdf [retrieved on 2017-10-23] * the whole document * | 1-15 | INV.<br>G06Q50/00<br>G06Q10/04 |
| X | US 2016/041982 A1 (HE JUNFENG [US] ET AL) 11 February 2016 (2016-02-11) * paragraphs [0035] - [0057]; figures 1-8 * | 1-15 | |
| X | US 2016/063093 A1 (BOUCHER MAXIME [US] ET AL) 3 March 2016 (2016-03-03) * paragraphs [0006] - [0008] * * paragraphs [0042] - [0083] * * figures 1, 2, 6, 9, 10 * | 1-15 | TECHNICAL FIELDS SEARCHED (IPC)<br><br>G06Q |
| X | US 2013/144899 A1 (LEE YOFAY KARI [US] ET AL) 6 June 2013 (2013-06-06) * paragraphs [0007], [0042] - [0051]; figures 1, 2, 5 * | 1-15 | |

The present search report has been drawn up for all claims

| Place of search | Date of completion of the search | Examiner |
|---|---|---|
| Munich | 24 October 2017 | Mülthaler, Evelyn |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 18 9931

This annex lists the patent family members relating to the patent documents cited in the above-mentioned European search report.
The members are as contained in the European Patent Office EDP file on
The European Patent Office is in no way liable for these particulars which are merely given for the purpose of information.

24-10-2017

| Patent document cited in search report | Publication date | Patent family member(s) | Publication date |
|---|---|---|---|
| US 2016041982 A1 | 11-02-2016 | NONE | |
| US 2016063093 A1 | 03-03-2016 | US 2016063093 A1<br>US 2017270126 A1 | 03-03-2016<br>21-09-2017 |
| US 2013144899 A1 | 06-06-2013 | US 2013144899 A1<br>US 2015006566 A1<br>US 2017039210 A1 | 06-06-2013<br>01-01-2015<br>09-02-2017 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 12763162 B
- US 55607212 A
- US 50309306 A
- US 97702710 A
- US 97826510 A
- US 73186612 A
- US 73210112 A
- US 67469512 A
- US 14244748 B
- US 47060714 A
- US 56141814 A
- US 63286912 A